# EUROPEAN PATENT SPECIFICATION

(11) **EP 4 129 049 B1**
(45) Date of publication and mention of the grant of the patent: **19.08.2026**
(21) Application number: 21780041.6
(22) Date of filing: 19.03.2021
(51) Int. Cl.: A01G 9/24, A01G 9/029, A01G 31/06

(54) **PLANT CULTIVATION DEVICE**
PFLANZENZUCHTVORRICHTUNG
DISPOSITIF DE CULTURE DE PLANTES

(30) Priority: 31.03.2020 KR 20200038970; 31.03.2020 KR 20200038971; 31.03.2020 KR 20200038972
(43) Date of publication of application: 08.02.2023
(73) Proprietor: LG Electronics Inc., Seoul 07336 (KR)
(72) Inventor: KIM, Eunjeong, Seoul 08592 (KR); YI, Myeongha, Seoul 08592 (KR); KIM, Deokhoon, Seoul 08592 (KR); AN, Jeongtak, Seoul 08592 (KR); LEE, Soobeom, Seoul 08592 (KR); PARK, Sangho, Seoul 08592 (KR)
(74) Representative: Ter Meer Steinmeister & Partner
(86) International application number: PCT/KR2021/003441
(87) International publication number: WO 2021/201475

(56) References cited:
- WO-A1-2020/045783
- WO-A1-2021/096084
- JP-A- 2014 226 102
- KR-A- 20150 072 486
- KR-B1- 101 342 141
- KR-B1- 101 398 928
- KR-U- 19990 003 983
- KR-Y1- 200 483 158
- TW-A- 201 440 638
- US-A1- 2015 156 973
- US-A1- 2018 359 946

## Description

### Technical Field

The present disclosure relates to an apparatus for cultivating plants.

### Background Art

In general, an apparatus for cultivating plants includes a predetermined cultivating chamber having an environment appropriate to grow the plants, and the plants are stored in the predetermined cultivating chamber. The apparatus for cultivating plants has components to supply nutrients and light energy required for plant growth, and the plants are grown by the supplied nutrients and light energy.

An apparatus for cultivating plants according to the related art is disclosed in Korean Patent Registration No. 10-1240375. In this related art, a structure is disclosed in which a multi-stage tray is disposed inside a cabinet, light is irradiated from a light irradiation unit to the tray, and the nutrient solution is supplied to the tray through the nutrient solution recovery container, and an inner portion of the cabinet is maintained at a set temperature by the air conditioning unit and the air circulation fan to be capable of cultivating plants.

In US Patent No. 2018/0359946 which is an apparatus for cultivating plants according to another related art, a structure is disclosed in which a plurality of trays for cultivating plants are provided in an inner portion of the cabinet, and light means irradiating light and water supply means are provided above the tray to supply nutrient solution, and a cooling device and a heating device using a refrigeration cycle are provided to adjust the temperature in the inner portion of the cabinet.

However, according to the prior art as described above, since the apparatus for cultivating plants of the type of circulating the nutrient solution is vulnerable to contamination of the nutrient solution, and thus there is a problem in plant growth since the contaminated nutrient solution is supplied to the plants, and there is a difficulty in maintaining the internal environment of the apparatus for cultivating plants hygienically due to inconvenience or the like such as the periodical replacement of the contaminated nutrient solution.

In addition, the internal environment of the apparatus for cultivating plants is configured to have a temperature and humidity suitable for plant growth, but there is a problem in which, since the internal environment above is an environment suitable for mold growth, plants and mold grow together, causing obstacles to plant growth and the safety of plants growing in the apparatus for cultivating plants is questioned.

In addition, there is a problem in that the seeds do not germinate when the moisture supplied to the seeds of crops in the apparatus for cultivating plants is excessively supplied, and there is a problem in that the seeds do not germinate even when a small amount of moisture is supplied.

In addition, the seeds of the crops grown in the apparatus for cultivating plants are sown so as to be spaced apart to have a certain interval according to the growth characteristics, but the position of the seeds is changed during the transfer of the bed, so there is a problem in that the growth performance of the seeds is reduced.

In addition, the internal environment of the apparatus for cultivating plants is configured to have a temperature and humidity suitable for plant growth, but there is a problem in that, since the internal environment above is an environment suitable for growth of mold or the like, plants, mold, and the like grow together, obstacles to plant growth occurs, and the aesthetics of the apparatus for cultivating plants is impaired.

Further examples of the prior art are disclosed in the patent applications published under the following numbers: WO 2021/096084 A1, US 2015/156973 A1, TW 201 440 638 A and WO 2020/045783 A1.

### Disclosure

### Technical Problem

An object of the present disclosure is to provide an apparatus for cultivating plants that prevents contamination of a cultivation space and maintains a hygienic environment.

An object of the present disclosure is to provide an apparatus for cultivating plants capable of optimizing the amount of water supplied, preventing residual water from being generated in the bed, and thus reducing the generation of odors and contamination.

An object of the present disclosure is to provide an apparatus for cultivating plants that maintains a clean and hygienic state of a pipe and a water tank to which water is supplied by supplying water to only a bed.

An object of the present disclosure is to provide an apparatus for cultivating plants that prevents contaminants such as mold and green algae from being generated in a medium in which seeds of plants are grown.

An object of the present disclosure is to provide an apparatus for cultivating plants that prevents the growth of plants from being reduced.

An object of the present disclosure is to provide an apparatus for cultivating plants that prevents contamination of a cultivation space and maintains a hygienic environment.

An object of the present disclosure is to provide an apparatus for cultivating plants capable of quickly suctioning water in a bed and supplying the water to seeds of crops.

An object of the present disclosure is to provide an apparatus for cultivating plants that allows the water of the bed to be uniformly supplied to the inside of the pod.

An object of the present disclosure is to provide an apparatus for cultivating plants that prevents the seeds of crops from being changed during the transfer process.

### Technical Solution

The apparatus for cultivating plants according to the present disclosure includes a pod which is seated on a bed provided with a water collection portion in which water is stored and which fills a medium absorbing the water of the water collection portion, and thus it is possible to prevent water from remaining in the water collection portion.

In the apparatus for cultivating plants according to the present disclosure, a medium for absorbing water is composed of inorganic vermiculite, so that water from the water collection portion quickly flows into the inside of the pod, and thus water can be supplied to the seeds.

The apparatus for cultivating plants according to the present disclosure can suppress the generation of mold in a seed growth environment by constituting a medium with inorganic vermiculite.

In the apparatus for cultivating plants according to the present disclosure, the nutrient solution material for supplying nutrients to the seeds is provided in the medium, so that when the water of the water collection portion is absorbed into the medium, the nutrient solution material is dissolved in the water and supplied to the seeds.

In the apparatus for cultivating plants according to the present disclosure, a pod protrusion protruding downward and provided with a water-through hole is formed in the pod, so that water stored in the water collection portion can be absorbed into the interior of the pod while seated on the bed.

The apparatus for cultivating plants according to the present disclosure includes a pod cover that covers an opened one surface of a pod and can suppress the generation of green algae in the medium by adjusting the irradiation amount of light supplied to the medium.

The apparatus for cultivating plants according to the present disclosure includes a lower medium for quickly absorbing water into the inside of a pod and an upper medium for maintaining absorbed water for a long time, and can supply water stored in the water collection portion of the bed to seeds placed inside the pod.

The apparatus for cultivating plants according to the present disclosure includes a moisture separation membrane that divides the upper medium and the lower medium and regulates the flow rate of water transferred from the lower medium to the upper medium, so that water can be uniformly supplied to the upper medium.

The apparatus for cultivating plants according to the present disclosure may include a pod cover that covers the opened one surface of the pod, thereby minimizing the area in which green algae is generated by light energy in the medium of the pod.

The apparatus for cultivating plants according to the present disclosure may include an water absorbing medium for quickly absorbing water into the inside of a pod and a seed medium for maintaining the absorbed water for a long time, and thus may supply water stored in the water collection portion of the bed to seeds positioned inside the seed medium.

The apparatus for cultivating plants according to the present disclosure accommodates the seeds inside the seed medium and inserts the seed medium into the medium insertion groove of the water absorbing medium, thereby minimizing movement of the seed medium during the transfer process.

The apparatus for cultivating plants according to the present disclosure includes a nutrient solution material for supplying nutrients to one or more of the seed medium and the water absorbing medium, and the nutrient solution material may be melted and uniformly supplied to the seeds while water is evenly spread into the seed medium and the water absorbing medium.

The apparatus for cultivating plants according to the present disclosure includes a pod cover that covers an opened one surface of a pod and adjusts an area to which light energy is irradiated, thereby minimizing green algae and mold generated by light energy and moisture.

The invention is defined by the appended claims.

### Advantageous Effect

The apparatus for cultivating plants according to the present disclosure has the advantage of preventing contamination of the cultivation space and maintaining a hygienic environment.

The apparatus for cultivating plants according to the present disclosure has the advantage of suppressing the generation of mold or green algae in the medium in a plant growth environment by configuring the medium with inorganic vermiculite having air permeability and water retention properties.

The apparatus for cultivating plants according to the present disclosure has an advantage in that residual water is prevented from being generated in a water collection portion in which water is stored, and thus contaminated water is prevented from being supplied to the pod.

Apparatus for cultivating plants according to the present disclosure can minimize the generation of green algae due to moisture and light on the surface of the medium by adjusting the irradiation amount of light supplied to the medium.

The apparatus for cultivating plants according to the present disclosure can divide between a medium in which water is absorbed and a medium in which seeds are placed, so that moisture is uniformly dispersed to the seeds through a difference in moisture between the two mediums.

The apparatus for cultivating plants according to the present disclosure can minimize the generation of mold on the surface of the medium by improving the environment of the medium.

The apparatus for cultivating plants according to the present disclosure has the advantage of preventing the supply of contaminated water to the pods by preventing residual water from being generated in the water collection portion in which water is stored.

Apparatus for cultivating plants according to the present disclosure can prevent excessive supply or excessive shortage of water by quickly suctioning water and uniformly supplying the suctioned water to the seeds.

The apparatus for cultivating plants according to the present disclosure can prevent deterioration of the growth performance of the seeds by enabling the seeds of crops to be fixed in a state spaced apart at regular intervals.

Apparatus for cultivating plants according to the present disclosure can suppress the generation of green algae in the medium by the light energy and moisture by limiting the area to which light energy is irradiated.

The apparatus for cultivating plants according to the present disclosure can uniformly supply nutrients to the seeds of crops through a nutrient solution material that is uniformly dissolved by absorbed water.

The apparatus for cultivating plants according to the present disclosure can improve the recycling performance of the water absorbing medium by dividing the seed medium and the water absorbing medium.

### Description of Drawings

FIG. 1 is a perspective view illustrating an apparatus for cultivating plants according to an embodiment of the present disclosure.
FIG. 2 is a perspective view illustrating a state where the door of the apparatus for cultivating plants according to the embodiment of the present disclosure is opened.
FIG. 3 is an exploded perspective view illustrating an apparatus for cultivating plants according to an embodiment of the present disclosure.
FIG. 4 is a perspective view taken along 4-4' of FIG. 2.
FIG. 5 is a longitudinal cross-sectional view illustrating an apparatus for cultivating plants according to an embodiment of the present disclosure.
FIG. 6 is a perspective view illustrating the internal structure of a machine room of the apparatus for cultivating plants according to an embodiment of the present disclosure.
FIG. 7 is an exploded perspective view illustrating a state where the blower assembly of the apparatus for cultivating plants according to an embodiment of the present disclosure is viewed from the front.
FIG. 8 is an exploded perspective view illustrating a state where the blower assembly is viewed from the rear.
FIG. 9 is an enlarged view illustrating "A" of FIG. 4.
FIG. 10 is an exploded perspective view illustrating a light assembly of an apparatus for cultivating plants according to an embodiment of the present disclosure.
FIG. 11 is a perspective view illustrating a light case according to an embodiment of the present disclosure.
FIG. 12 is a cutaway perspective view illustrating a light case according to an embodiment of the present disclosure.
FIG. 13 is a perspective view illustrating a water supply module according to an embodiment of the present disclosure.
FIG. 14 is a cross-sectional view taken along line 14-14' of FIG. 13.
FIG. 15 is a rear view illustrating a water supply module according to an embodiment of the present disclosure.
FIG. 16 is a perspective view illustrating a state where a portion of an outer case of the cabinet is removed according to an embodiment of the present disclosure.
FIG. 17 is a perspective view illustrating a disposition of a water supply flow path of an apparatus for cultivating plants according to an embodiment of the present disclosure.
FIG. 18 is an enlarged view illustrating "B" of FIG. 5.
FIG. 19 is a perspective view illustrating a state where the bed of the apparatus for cultivating plants according to an embodiment of the present disclosure is withdrawn.
FIG. 20 is a perspective view illustrating a disposition relationship between a bed and a water supply flow path according to an embodiment of the present disclosure.
FIG. 21 is a plan view illustrating a bed according to an embodiment of the present disclosure.
FIG. 22 is a cutaway perspective view illustrating a bed according to an embodiment of the present disclosure.
FIG. 23 is a perspective view illustrating a pod according to a first embodiment of the present disclosure.
FIG. 24 is an exploded perspective view illustrating a pod according to the first embodiment of the present disclosure.
FIG. 25 is a cross-sectional view illustrating a pod according to a first embodiment of the present disclosure.
FIG. 26 is an enlarged view illustrating "C" of FIG. 4.
FIG. 27 is a cross-sectional view illustrating a pod according to a second embodiment of the present disclosure.
FIG. 28 is an exploded perspective view illustrating a pod according to a third embodiment of the present disclosure.
FIG. 29 is a cross-sectional view illustrating a pod according to a third embodiment of the present disclosure.
FIG. 30 is a view illustrating a state where water is supplied to the inside of the pod according to the third embodiment of the present disclosure.
FIG. 31 is a graph illustrating the absorption amount and time of water absorbed into the medium according to the third embodiment of the present disclosure.
FIG. 32 is a cross-sectional view illustrating a pod according to a fourth embodiment of the present disclosure.
FIG. 33 is an exploded perspective view illustrating a pod according to a fifth embodiment of the present disclosure.
FIG. 34 is a cross-sectional view illustrating a pod according to a fifth embodiment of the present disclosure.
FIG. 35 is a view illustrating a state where water is supplied to the inside of the pod according to the fifth embodiment of the present disclosure.
FIG. 36 is a perspective view illustrating a pod according to a sixth embodiment of the present disclosure.
FIG. 37 is an exploded perspective view illustrating a pod according to a sixth embodiment of the present disclosure.
FIG. 38 is a cross-sectional view illustrating a pod according to a sixth embodiment of the present disclosure.
FIG. 39 is an exploded perspective view illustrating a pod according to a seventh embodiment of the present disclosure.
FIG. 40 is a cross-sectional view illustrating a pod according to a seventh embodiment of the present disclosure.
FIG. 41 is an exploded perspective view illustrating a pod according to an eighth embodiment of the present disclosure.
FIG. 42 is a cross-sectional view illustrating a pod according to an eighth embodiment of the present disclosure.
FIG. 43 is an exploded perspective view illustrating a pod according to a ninth embodiment of the present disclosure.
FIG. 44 is a cross-sectional view illustrating a pod according to a ninth embodiment of the present disclosure.

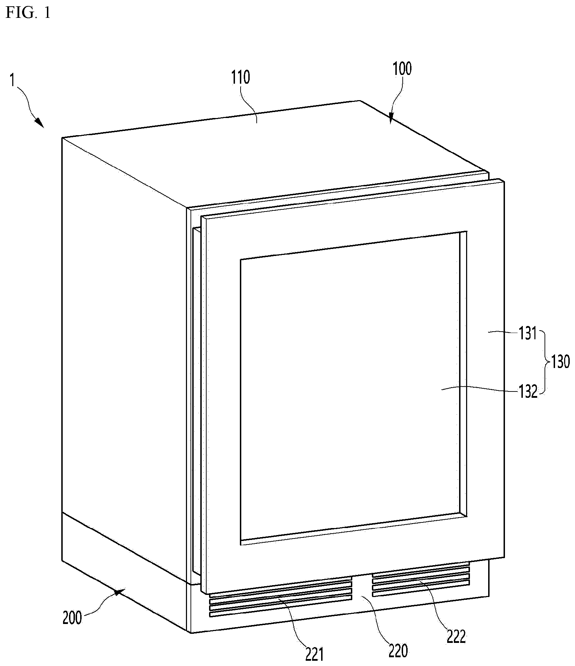

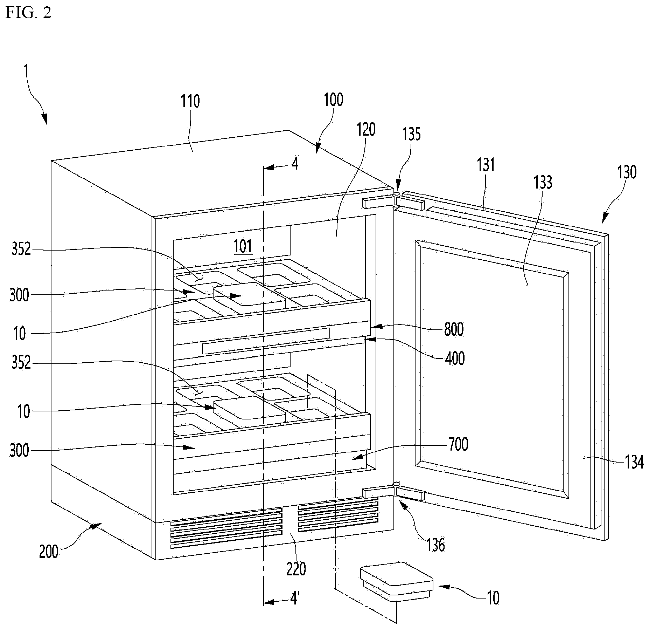

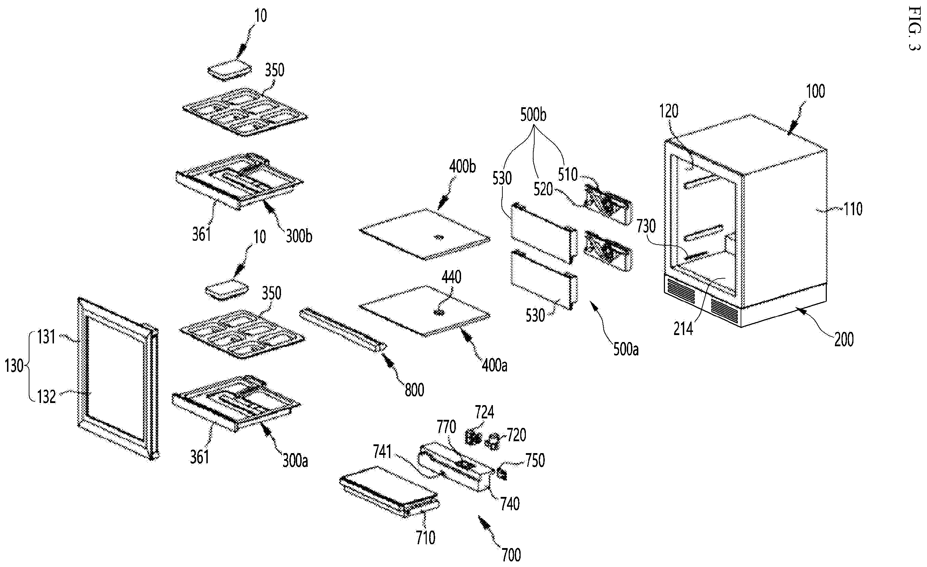

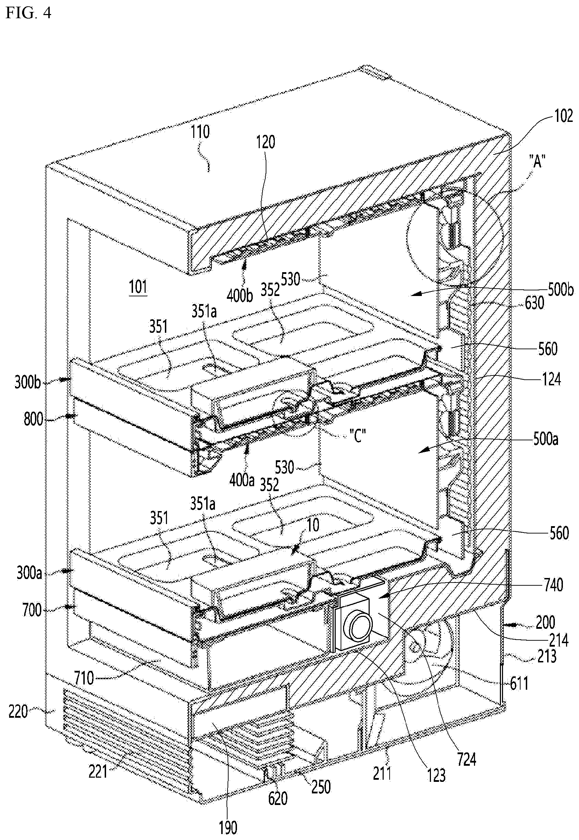

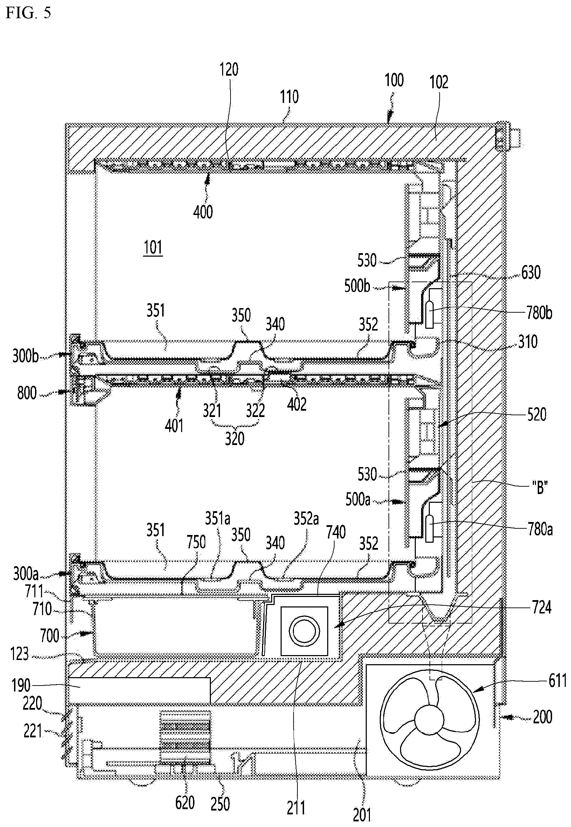

FIG. 1 is a perspective view illustrating an apparatus for cultivating plants according to an embodiment of the present disclosure, FIG. 2 is a perspective view illustrating a state where the door of the apparatus for cultivating plants according to the embodiment of the present disclosure is opened, FIG. 3 is an exploded perspective view illustrating an apparatus for cultivating plants according to an embodiment of the present disclosure, FIG. 4 is a perspective view taken along 4-4' of FIG. 2, and FIG. 5 is a longitudinal cross-sectional view illustrating an apparatus for cultivating plants according to an embodiment of the present disclosure.

Looking at the whole with respect to the apparatus for cultivating plants 1 according to the embodiment of the present disclosure with reference to the drawings, the outer appearance thereof may be formed by a cabinet 100 forming a space in which a plant is cultivated therein, and a door 130 for opening and closing the cabinet 100. In this case, the cultivated plant is usually edible by the user, such as leaf vegetables and herbs that can be used for wrapping or salads, and is easy to cultivate, and it is preferable that plants that do not occupy a lot of space are cultivated, and may be provided in the form of a pod 10 which includes seeds and nutrients.

The cabinet 100 is formed to have an open front surface, and a cultivation space 101 may be provided therein. The cabinet 100 may include an outer case 110 forming an outer appearance and an inner case 120 forming the cultivation space 101, and an insulating material 102 may be provided between the outer case 110 and the inner case to insulate the cultivation space and maintain the cultivation space 101 at a set temperature.

The outer case 110 and the inner case 120 may be formed of a metal material and may be formed by combining a plurality of plate-shaped materials with each other. In particular, the inner case 120 may have both side surfaces, a rear surface, and an upper surface formed in a metal plate shape and may be coupled to each other.

A plurality of beds 300 may be vertically disposed inside the cabinet 100. In this embodiment, two beds 300a and 300b are vertically provided and may have the same structure. The beds 300 may be referred to as an upper bed 300b and a lower bed 300a, respectively, for convenience of explanation and understanding. Of course, two or more beds 300 may be provided according to the size of the cabinet 100.

The bed 300 may have a structure in which a plurality of pods 10 containing plant seeds and nutrients necessary for cultivation are seated. The bed 300 may be referred to as a shelf or a tray. In addition, the bed 300 may have a structure in which the pod 10 can be seated and maintained in a seated state. In addition, the bed 300 may have a structure which easily seats the pod 10 and can introduce/withdraw so that management and harvesting of plants growing in the pod 10 is facilitated.

In addition, the bed 300 may have a structure in which water supplied from the water tank 700 flows and is delivered to all the pods 10 seated on the bed 300. In addition, the bed 300 may maintain an appropriate water level so as to constantly supply moisture to the pod 10.

Meanwhile, a machine room 200 may be provided below the cabinet 100. In the machine room 200, a compressor 610 and a condenser 620 constituting a refrigeration cycle for adjusting the temperature of the cultivation space 101 may be disposed.

In addition, a grill cover 220 may be provided on the front surface of the machine room 200, and the grill cover 220 may include a grill suction port 221 through which air is suctioned into the machine room 200, and a grill discharge port 222 through which internal air of the machine room 200 is discharged.

Meanwhile, the internal temperature of the cultivation space 101 may be adjusted by the refrigeration cycle 600. In this case, the evaporator 630 may be disposed on the inner rear wall surface of the cultivation space 101. The evaporator 630 may be provided with a roll bond type heat exchanger and may be referred to as a heat exchanger. The evaporator 630 may have a plate-shaped structure that is easily attached to the rear wall surface of the cultivation space 101. In addition, the evaporator 630 minimizes the loss of the cultivation space 101 due to the platelike structure and is close to the cultivation space 101 to effectively adjust the temperature of the cultivation space 101.

A heater (not illustrated) may be provided on the rear wall surface of the cultivation space 101. Accordingly, heating and cooling may be performed in the rear area of the cultivation space 101. The interior of the cultivation space 101 by the evaporator 630 and the heater may maintain a temperature suitable for plant growth (eg, 18°C-28°C). Of course, if necessary, a configuration for heating other than the heater may be provided, and various heating methods such as a heating structure through hot gas or a heating structure through conversion of a refrigeration cycle will be possible. The temperature inside the cultivation space 101 is sensed by the internal temperature sensor 450, and can be kept constant regardless of the external temperature of the cabinet 100.

In addition, a blower assembly 500 may be provided in front of the evaporator 630. The blower assembly 500 may circulate the interior of the cultivation space 101 to uniformly cool or heat the cultivation space 101.

The blower assembly 500 may include an upper blower assembly 500b disposed in an upper space divided by the bed 300 and a lower blower assembly 500a disposed in a lower space. The blower assembly 500 disposed vertically has the same structure and shape, except that there is a difference only in the mounting position. The blower assembly 500 may be provided by a number corresponding to the number of the beds 300 and may blow air from the rear toward the front of the bed 300. Accordingly, independent air circulation can be achieved in each space of the interior of the cultivation space 101 partitioned by the bed 300.

The air in the interior of the cultivation space 101 is circulated by the blower assembly 500, and in particular, the circulated air passes through the evaporator 630 so that the entire interior of the cultivation space 101 has a uniform temperature, while temperature adjustment can be quickly achieved. In addition, the air circulated by the blower assembly 500 may flow while passing through the upper surface of the bed 300 and the lower surface of the light assembly 400.

The air flowing by the blower assembly 500 passes through the upper surface of the bed 300 to make the respiration of the plants grown in the bed 300 more smooth and to make the plants to be shaken appropriately and thus the air can provide the optimal airflow necessary for growth by controlling stress. In addition, the air flowing by the blower assembly 500 can prevent overheating of the light assembly 400 while passing through the lower surface of the light assembly 400.

Meanwhile, the light assembly 400 may be provided above the bed 300. The light assembly 400 provides light necessary for plants by irradiating light toward the bed 300. In this case, the amount of light irradiated by the light assembly 400 may be set to be similar to sunlight, and the amount of light and irradiation time optimized for the cultivated plant may be set.

The light assembly 400 may include an upper light assembly 400b provided in an upper space partitioned by the bed 300 and a lower light assembly 400a provided in a lower space. The upper light assembly 400b may be mounted on an upper surface of the cultivation space 101, and the lower light assembly 400a may be mounted on a lower surface of the upper bed 300b.

In other words, the upper light assembly 400b and the lower light assembly 400a may be positioned vertically above the bed 300 disposed below, respectively, and on the upper surface of the partitioned cultivation space 101, it is possible to adjust the growth of cultivated plants by irradiating light toward the bed 300.

A water tank 700 may be provided on a bottom surface inside the cabinet 100. The water tank 700 may store water supplied to the bed 300. The water tank 700 may be positioned below the bed 300 positioned at the lowermost position among the plurality of beds 300, and the front surface the water tank may be positioned at a position corresponding to the front end of the bed 300.

The length of the water tank 700 in the horizontal direction may correspond to the width of the internal space of the cabinet 100. In addition, the length of the water tank 700 in the vertical direction may be formed to correspond to a distance between the bed 300 positioned at the lowermost position and the bottom surface of the cultivation space 101. In other words, the water tank 700 may be formed to fill the entire space below the lower bed 300a positioned at the lowermost position, and the space behind the water tank 700 can be covered by the water tank 700.

A pump cover 740 may be provided in a space behind the water tank 700 covered by the water tank 700. A water pump 720 and a water supply valve 724 to be described below may be provided inside the pump cover 740. The pump cover 740 and the internal components of the pump cover 740 and the pipe connected to the components may be referred to as a water supply unit or a water supply module.

The water tank 700 may be provided in the interior of the cultivation space 101 to be capable of being introduced or withdrawn in a front and rear direction. To this end, tank rails 730 for guiding the introduction/withdrawal of the water tank 700 may be provided on both sides of the water tank 700 in the left and right directions. In addition, the water tank 700 may be opened in a state of being introduced or withdrawn to have a structure in which water can be additionally supplied.

Meanwhile, the display assembly 800 may be provided in the opened front half portion of the cabinet 100. The display assembly 800 may output the operating state of the apparatus for cultivating plants 1 to the outside. In addition, the display assembly 800 may be provided with a manipulation part to which a user's manipulation is input to set and input the overall operation of the apparatus for cultivating plants 1. For example, the display assembly 800 may include a touch screen structure and may include a structure such as a button or a switch.

The door 130 may have a size capable of shielding the opened front surface of the cabinet 100. In addition, an upper hinge 135 and a lower hinge 136 may be shaft-coupled to the upper end and lower end of one of the sides of the door 130 in the left and right direction. The door 130 may be rotatably coupled to the cabinet 100 by the upper hinge 135 and the lower hinge 136, and the cultivation space 101 can be opened and closed by the rotation of the door 130.

At least a part of the door 130 may have a see-through structure, and the cultivation space 101 may be checked even when the door 130 is closed.

In detail, the door 130 may include a door frame 131 forming a circumference and having an opening in the center, and door panels 132 and 133 for shielding the opening of the door frame 131. The door panels 132 and 133 may be formed of glass or a transparent plastic material to have a structure in which the inside can be seen through. In addition, the door panels 132 and 133 may have a color or a colored coating, metal deposition, or film attached thereto so that the cultivation space 101 is selectively visible or invisible.

Meanwhile, a plurality of the door panels 132 and 133 may be disposed in the front and rear direction, and an insulating space may be formed between the plurality of door panels 132 and 133. In addition, if necessary, the door panels 132 and 133 may include insulating glass. Accordingly, it is possible to insulate the inside and the outside of the cabinet 100.

In addition, if necessary, the entire front outer appearance of the door 130 may be formed by the door panel 132 disposed on the front surface of the door 130.

Hereinafter, the structure of the apparatus for cultivating plants 1 having the above structure will be described in more detail with reference to the drawings for each configuration.

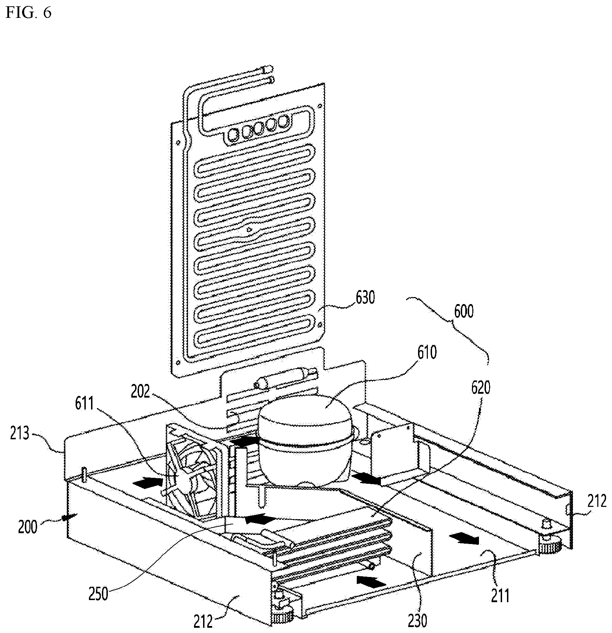

FIG. 6 is a perspective view illustrating the internal structure of a machine room of the apparatus for cultivating plants according to an embodiment of the present disclosure.

As illustrated, the machine room 200 is mounted on the lower surface of the cabinet 100 and forms a space independent from the cultivation space 101 under the cabinet 100. The machine room 200 may be configured by a bottom plate 211 forming a lower surface, a pair of side plates 212 forming both side surfaces, and a rear plate 213 forming a rear surface.

The bottom plate 211, the side plate 212, and the rear plate 213 may be coupled in a single module form to be referred to as a machine room frame. The space formed by the machine room frame may be formed so that the upper surface and the front surface are opened. Accordingly, the machine room frame is coupled to the lower surface of the cabinet 100 to form the machine room 200 space under the cabinet 100.

The internal space of the machine room 200 may be partitioned by a barrier 230. The barrier 230 may extend backward from the opened front end of the machine room 200. A condenser 620 may be provided in a space on the left side partitioned by the barrier 230, and a compressor 610 may be provided on a space on the right side partitioned by the barrier 230. In addition, a heat dissipation fan 611 for forcibly flowing air from the left to the right may be provided at the rear end of the barrier 230.

Meanwhile, a grill cover 220 may be provided on the opened front surface of the machine room 200. The grill cover 220 shields the open front surface of the machine room 200, a grill suction port 221 is formed in the front surface of the left space partitioned by the barrier 230, and a grill discharge port 222 may be formed in the front surface of the right space, respectively.

Accordingly, when the heat dissipation fan 611 is driven, external air is suctioned and flows into the left space of the machine room 200 through the grill suction port 221, and the suctioned air exchanges heat with the refrigerant in the condenser 620 while passing through the condenser 620. Then, the air passing through the heat dissipation fan 611 cools the compressor 610 while passing through the compressor 610. Also, the air passing through the compressor 610 may be discharged forward through the grill discharge port 222.

In other words, in a state where the apparatus for cultivating plants 1 is installed, both the suction of external air and the discharge of the air inside the machine room 200 are performed from the front while passing through the grill cover 220. Accordingly, the apparatus for cultivating plants 1 can be installed even in a space where the left and right sides and the rear surface are blocked. In particular, even if the apparatus for cultivating plants 1 is installed in a piece of furniture such as a sink as a built-in, cooling and heat exchange of the compressor 610 and the condenser 620 inside the machine room 200 can be effectively performed.

Meanwhile, the evaporator 630 constituting the refrigerating cycle 600 is provided inside the cabinet 100, is vertically disposed on the rear surface of the cultivation space 101, and can be easily connected by components and refrigerant pipes in the machine room 200.

A condensate receiver 250 is provided in the machine room 200. At this time, the condensate receiver 250 may be provided below the condenser 620, and the condensate flowing down from the condenser 620 may be stored, and water discharged from the cultivation space 101 may be stored.

Meanwhile, the upper side of the machine room 200 may be provided with a controller 190 for controlling the operation of each component of the apparatus for cultivating plants 1. For example, the controller 190 may be provided between the upper surface of the machine room 200 and the inner bottom surface of the cultivation space 101 and may be accessible by opening the grill cover 220. Therefore, even when the apparatus for cultivating plants 1 is installed and in use, the controller 190 can be easily accessed, and maintenance can be facilitated.

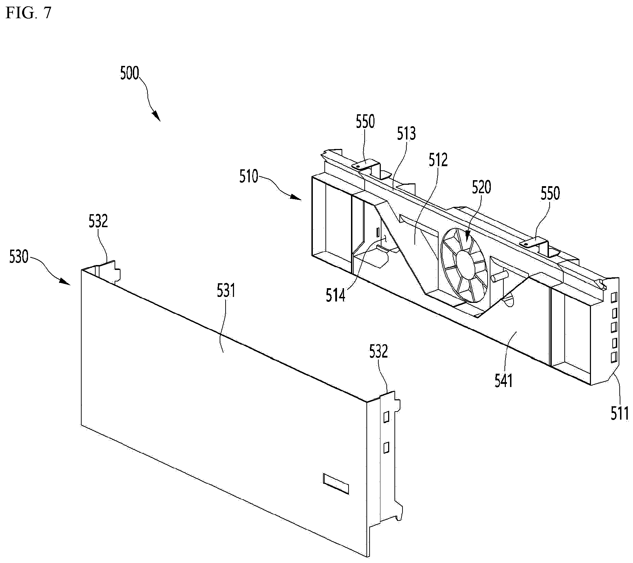

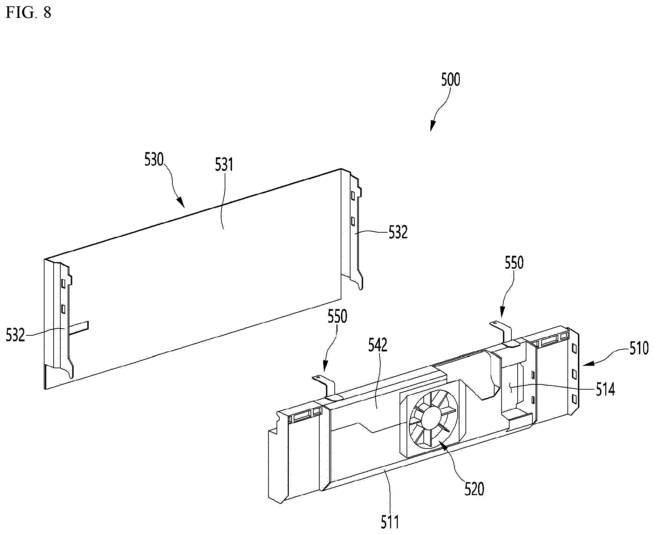

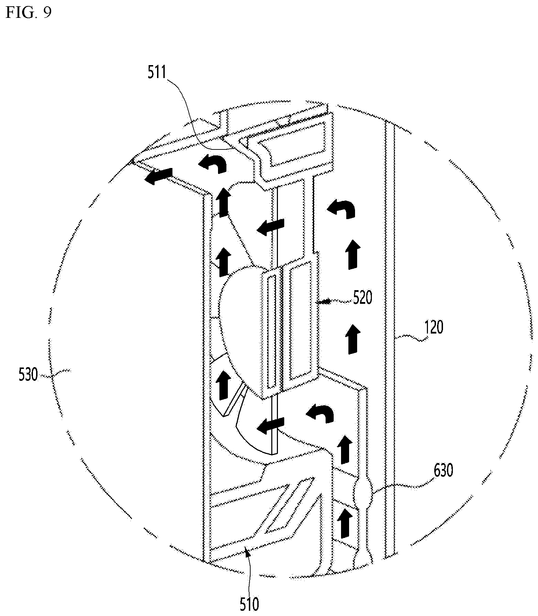

FIG. 7 is an exploded perspective view illustrating a state where the blower assembly of the apparatus for cultivating plants according to an embodiment of the present disclosure is viewed from the front, FIG. 8 is an exploded perspective view illustrating a state where the blower assembly is viewed from the rear, and FIG. 9 is an enlarged view illustrating "A" of FIG. 4.

As illustrated in the drawing, the evaporator 630 may be provided on the rear wall surface of the cultivation space 101, and the blower assembly 500 may be provided in front of the evaporator 630.

The blower assembly 500 is configured to circulate air above the cultivation space 101 partitioned by the bed 300. Accordingly, the blower assembly 500 is provided in a number corresponding to the number of the beds 300 and is provided at the lower end of the light assembly 400 and at an upper portion adjacent to the bed 300.

The blower assembly 500 may include a blower fan 520, a fan guide 510 to which the blower fan 520 is mounted, and a blower cover 530 shielding the fan guide 510 and the evaporator 630.

In detail, the blower fan 520 is formed in the shape of a box fan and may be provided in the center of the fan guide 510. In addition, the blower fan 520 may discharge the air flowing thereinto from the rear to the front of the blower assembly 500.

The fan guide 510 provides a space in which the blower fan 520 is mounted and is configured to guide the discharge of air discharged by the blower fan 520. The fan guide 510 is injection-molded with a plastic material, and the blower fan 520 may be mounted in the center of the rear surface of the fan guide 510.

Meanwhile, an air guide 512 is formed on the front surface of the fan guide 510 to guide air discharged from the blower fan 520 upward. The air guide 512 may be provided on both sides in the left and right direction with respect to the center of the blower fan 520 and may be configured to become wider toward the upper side. Accordingly, the air discharged by the blower fan 520 flows along the inclined surface and may become closer to the discharge port formed at the upper end of the fan guide 510 toward the outside.

A discharge guide 513 may be formed on the front upper end of the fan guide 510. The discharge guide 513 forms a surface that protrudes forward from the lower side to the upper side. In other words, the discharge guide 513 forms an inclined surface or a round surface, and guides the air flowing from the lower side to the upper side toward the front. At this time, since the end portion of the discharge guide 513 is adjacent to the lower surface of the light assembly 400, the air discharged from the blower assembly 500 can flow from rear end to the front side of the lower surface of the light assembly 400 by the discharge guide 513. The light assembly 400 can be cooled when the light assembly 400 is heated by such an air flow.

A connector hole 514 may be formed at one side of the fan guide 510. The connector hole 514 is formed to be opened at a position corresponding to the connector 124a mounted on the rear wall surface of the cultivation space 101. Therefore, when the blower assembly 500 is mounted, the connector 124a is inserted into the connector hole 514 so as not to interfere with each other. In addition, the electric wire connected to the blower fan 520 may be connected to the connector 124a exposed through the connector hole 514.

Blower brackets 550 that are inserted into and mounted on the blower assembly mount 415 may be provided on both sides of the upper surface of the fan guide 510 in the left and right direction. One end of the blower bracket 550 may be coupled to the upper surface of the fan guide 510, and the other end thereof may be mounted to a blower assembly mount 415 formed at the rear end of the lower surface of the light assembly 400. Accordingly, the light assembly 400 and the blower assembly 500 may be coupled to each other in a vertically intersecting form. In addition, the blower assembly 500 may discharge air from the rear end of the light assembly 400 toward the front.

In addition, an inlet guide 511 may be formed on a lower surface of the fan guide 510. The inlet guide 511 may be inclined upward toward the rear and may guide air suctioned in from the lower side of the fan guide 510 to smoothly flow to the rear of the fan guide 510.

In addition, recessed spaces are formed in the front and rear surfaces of the fan guide 510, and a front insulating material 541 and a rear insulating material 542 may be disposed inside the recessed space, respectively. Accordingly, it is possible to prevent the cold air generated in the evaporator 630 from being transmitted to the front directly through the blower assembly 500.

Meanwhile, the blower cover 530 may shield the fan guide 510 and components mounted on the fan guide 510 in front of the fan guide 510. In addition, the blower cover 530 is extended to a position adjacent to the upper end of the bed 300 to be capable of preventing the evaporator 630 and the rear wall surface of the inner case 120 from being exposed in a case where the blower assembly 500 is mounted.

In addition, the blower cover 530 and the bed 300 may be slightly spaced apart to each other, and the air flowing into the rear along the bed 300 through between the lower end of the blower cover 530 and the upper surface of the bed 300 may be suctioned to face the blower fan 520.

At this time, in order to prevent the evaporator 630 from being exposed to the cultivation space 101 through the gap between the blower cover 530 and the bed 300, a shielding plate 560 can be further provided in a corresponding area of the evaporator 630.

The blower cover 530 may form the outer appearance of the rear wall surface of the cultivation space 101.

The blower cover 530 may be formed of the same metal material as the inner case 120 and may be formed by bending a plate-shaped material. The blower cover 530 may include a front portion 531 and a side portion 532.

The front portion 531 may be exposed through the cultivation space 101 and may be formed to correspond to a horizontal length of the cultivation space 101. In addition, the upper end of the front portion 531 may be positioned adjacent to the upper end of the fan guide 510 and the upper end of the light assembly 400, and serves as an outlet through which the air substantially discharged by the blower fan 520 is discharged into the cultivation space 101. The lower end of the front portion 531 may extend further downward than the lower end of the fan guide 510 and may be positioned adjacent to the upper surface of the bed 300, and serves as a suction port in which air suctioned substantially toward the blower fan 520 flows.

In other words, by the blower cover 530, the rear components are shielded and the rear outer appearance of the cultivation space 101 is formed, and at the same time, the blower cover may serve as a suction port for air flowing along the bed 300 and a discharge port for air discharged along the light assembly 400 so that air circulates in the cultivation space 101. In particular, the structure of the blower assembly 500 may allow air to flow along the bed 300 and the light assembly 400, and while flowing along the rear of the fan guide 510, the evaporator 630 or the air cooled or heated by the heater continuously circulates inside the cultivation space 101, so that the temperature of the cultivation space 101 can be adjusted. Through this continuous circulation of air, the cultivation space 101 maintains a constant temperature as a whole, and the inside of the cultivation space can be in an optimal state, such as providing airflow for plants to grow inside the bed 300.

The side portion 532 may be bent backward at both ends of the front portion 531 and may be coupled to both side surfaces of the fan guide 510. The side portion 532 may have a coupling structure corresponding to the side surface of the fan guide 510 and may be coupled to each other by the elasticity of the side portion 532 itself without fastening a separate coupling member.

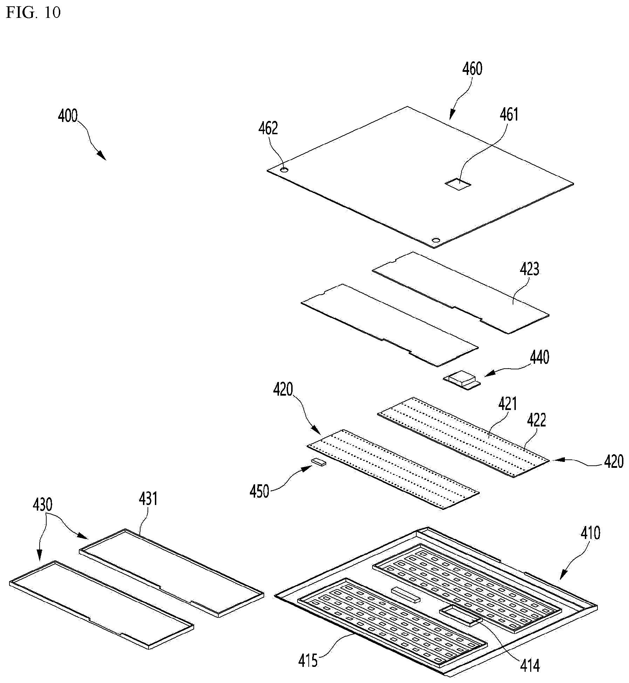

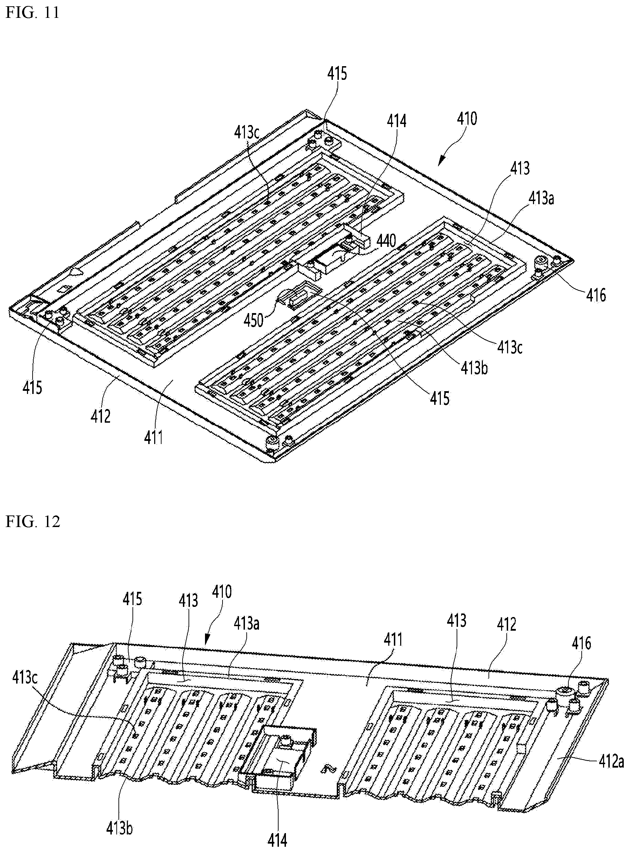

FIG. 10 is an exploded perspective view illustrating a light assembly of an apparatus for cultivating plants according to an embodiment of the present disclosure, FIG. 11 is a perspective view illustrating a light case according to an embodiment of the present disclosure, and FIG. 12 is a cutaway perspective view illustrating a light case according to an embodiment of the present disclosure.

As illustrated in the drawing, the light assembly 400 may have a size corresponding to the upper surface of the cultivation space 101 or the bed 300. Therefore, light can be evenly irradiated to the entire area of the bed 300 disposed below.

The light assembly 400 may include a light case 410 which has an open lower surface and in which the LED module 420 can be accommodated, and a cover plate 460 for shielding the opened upper surface of the light case 410.

The light case 410 may include a bottom surface 411 formed in a rectangular plate shape, and a case edge 412 extending upward along the circumference. Meanwhile, the front surface 412a of the case edge 412 may be inclined to minimize exposure of the light assembly 400 when the user opens the door 130.

A module mount 413 may be formed in the front half portion facing forward and the rear half portion facing rearward based on the center of the bottom surface 411 of the light case 410. The module mount 413 is a part on which the LED module 420 is mounted and may be configured to mount a plurality of LED modules 420. When the LED module 420 is configured as one, there is a problem that the entire LED module 420 has to be replaced when an abnormality occurs in the LED module 420, and in a case where the number of the LED modules 420 is too large, there is a problem in that mounting and assembly of the LED modules are difficult and the disposition of electric wires connected to the LED module 420 is not easy. Accordingly, the LED module 420 is composed of two and disposed in the front and rear direction, and a space in which a temperature sensor mount 415 and a residual water detection device mount 414 for disposing a temperature sensor 450 and a residual water detection sensor 440 can be secured between the LED modules 420.

Meanwhile, since the bed 300 is not provided on the upper light assembly 400b of the light assembly 400 mounted on the upper surface of the cultivation space 101, the residual water detection sensor 440 may not be provided. The residual water detection device mount 414 may be formed in both the upper light assembly 400b and the lower light assembly 400a, but the residual water detection sensor 440 is provided only in the lower light assembly 400a and thus can be detected whether there is residual water on the upper bed 300b.

The module mount 413 may be defined by a mount edge 413a. The mount edge 413a protrudes upward along the circumference of the LED module 420, and thus a space in which the LED module 420 is accommodated by the mount edge 413a may be formed. The mount edge 413a has a protruding shape when viewed from above, and has a recessed shape when viewed from below, so that the light cover 430 to be described below can be mounted thereon.

A light groove 413b may be formed inside the module mount 413. The light groove 413b is formed along the disposition of the LEDs 422 provided in the LED module 420, extends from the left end to the right end inside the module mount 413, and can be disposed continuously in the front and rear direction.

The light groove 413b may have a protruding shape when viewed from above and have a recessed shape when viewed from below. In addition, a plurality of LED holes 413c may be formed along the protruding center of the light groove 413. The LED holes 413c may be formed at corresponding positions to the plurality of LEDs 422, respectively. In addition, both sides of the light groove 413b are inclined or rounded around the LED hole 413c so that the light irradiated from the LED 422 can be reflected through the light groove 413b and irradiated downward. In addition, the inner surface of the light groove 413b may be surface-treated or coated to more effectively reflect light. An inner surface of the light groove 413b is defined as one surface facing the cultivation space 101.

The LED module 420 may be configured such that a plurality of LEDs 422 are mounted on a substrate 421. The substrate 421 may be formed to have a size corresponding to that of the module mount 413, and thus may be fixed inside the mount edge 413a.

In addition, a plurality of the LEDs 422 may be continuously disposed at regular intervals on the substrate 421. In this case, the LED 422 may be disposed at a position corresponding to the LED hole 413c. The LED 422 may be configured to have a light quantity (wavelength) similar to sunlight and may be configured to irradiate light of a color capable of promoting photosynthesis of plants.

In addition, a cover sheet 423 may be provided above the LED module 420. The cover sheet 423 is to prevent moisture penetration into the substrate 421 or contamination damage thereof and may be formed in a size capable of completely shielding the substrate 421 from above. The cover sheet 423 may be formed of a dielectric material, and may be formed of an insulating material to prevent heat from penetrating upward during the operation of the LED 422.

Meanwhile, an electric wire guide 417 for guiding electric wires connected to the LED module 420 may be formed inside the light case 410. The electric wire guide 417 is positioned on one of both sides of the light case 410 in the left and right direction and may be disposed in the front and rear direction along the space between the module mount 413 and the edge 412. Accordingly, the electric wire connected to the LED module 420 may be guided to the rear end of the light case 410 and the electric wire may be connected to the connector 124a on the rear surface of the cultivation space 101.

In addition, blower assembly mounts 415 in which the blower assembly 500 can be mounted may be formed on both sides of the rear end of the light case 410. The blower assembly mount 415 may be formed by recessing the lower surface of the light case 410 so that the blower brackets 550 provided on both upper sides of the blower assembly 500 can be inserted.

The cover plate 460 may have a size corresponding to the size of the light case 410 and is formed in a plate shape to shield the opened upper surface of the light case 410. Boss holes 462 corresponding to mounting bosses 416 formed at four corners of the light case 410 may be formed in the cover plate 460. In addition, the screw fastened below the mounting boss 416 may pass through the boss hole 462 to be fastened to the surface on which the light assembly 400 is mounted.

In addition, a sensor hole 461 may be formed at a position corresponding to the residual water detection sensor 440 in the cover plate 460. Therefore, the residual water detection device provided with the residual water detection sensor 440 may be exposed upwards of the cover plate 460 and contact the lower surface of the bed 300 disposed above to detect residual water inside the bed 300. Of course, since the bed 300 is not disposed above the uppermost light assembly 400b among the light assemblies 400, the residual water detection device and the sensor hole 461 may be omitted.

A plurality of light assemblies 400 may be provided in a case where the cultivation space 101 is partitioned by a multi-stage bed 300. In addition, the uppermost light assembly 400 may be fixedly mounted on the upper surface of the cultivation space 101, and the lower light assembly 400 may be fixedly mounted adjacent to the lower surface of the bed 300 at the lower side of the bed 300. In this case, the screw fastened for mounting the light assembly 400 may be fastened through the mounting boss 416 and the boss hole 462.

Meanwhile, a light cover 430 may be provided on a lower surface of the light case 410. The light cover 430 is mounted on the light case 410 to form a portion of the lower surface of the light case 410, shields the module mount 413 from below, and can be configured to protect the LED 422 disposed therein.

The light cover 430 may be formed of a transparent material to allow light to pass through, and a coating or surface treatment for light diffusion may be added to the light cover 430.

A cover edge 431 bent upward may be formed around the light cover 430, and the cover edge 431 may be inserted into the recessed inside of the mount edge 413a to be fixedly mounted.

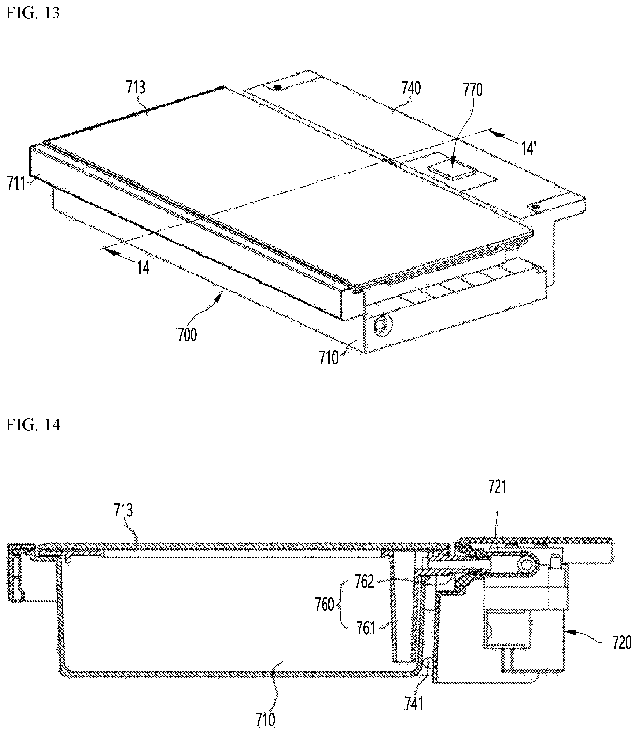

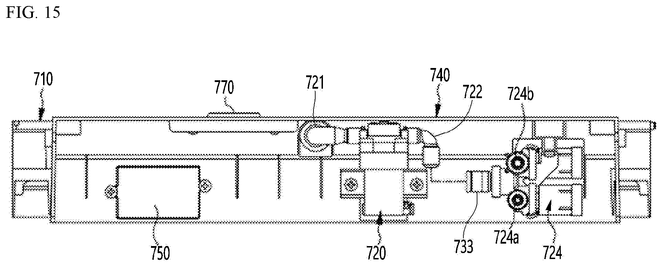

FIG. 13 is a perspective view illustrating a water supply module according to an embodiment of the present disclosure, FIG. 14 is a cross-sectional view taken along line 14-14' of FIG. 13, and FIG. 15 is a rear view illustrating a water supply module according to an embodiment of the present disclosure.

As illustrated in the drawing, the water supply module is for supplying water to the pod 10 for cultivation of crops, and the water stored in the apparatus for cultivating plants 1 can be configured to be supplied as much as an appropriate amount at an appropriate time.

In particular, in this embodiment, only water may be supplied through the water supply module, and nutrients may be provided through the pod 10. In other words, various nutrients required for a variety of crops can be provided through the pod 10, and even if different types of pods 10 are provided in one bed 300, nutrients can be provided from each pod. In addition, water may be supplied from the water supply module, and accordingly, constituents other than water are not stored or flow inside the water supply module, so that contamination is prevented and a clean state can be maintained.

The water supply module may include a water tank 700 for storing water for water supply, a water pump 720 for forcibly supplying water from the water tank 700, and a pump cover 740 which forms a mounting space for the water pump 720 and shields the components including the water pump 720. In addition, a water supply valve 724 may be provided on the pump cover 740, and water supply pipes 780a and 780b for guiding water to the bed 300 may be connected to the water supply valve 724. In this embodiment, the water supply module may be provided below the lower bed 300a of the upper bed 300b and the lower bed 300a.

In detail, the water tank 700 is formed in a rectangular box shape with an open upper surface so that water supplied to the bed 300 can be accommodated therein. In addition, the water tank 700 may be formed to have a width corresponding to the length of the cultivation space 101 in the horizontal direction. The water tank 700 may be positioned below the bed 300. A lower portion of the bed 300 in which the water tank 700 is positioned may be defined as a lower portion of the lower bed 300a. The water tank 700 can be formed to fill the space between the bottom surface of the cultivation space 101 and the bottom surface of the bed 300. A space in which the water tank 700 can be accommodated may be formed between a lower surface of the cultivation space 101 and a lower surface of the bed 300.

A tank cover 713 may be provided on the opened upper surface of the water tank 700. The tank cover 713 is for opening and closing the opened upper surface of the water tank 700, and a rear end thereof may be rotatably coupled to the upper surface of the water tank 700. Accordingly, the user may fill the inside of the water tank 700 with water after opening the tank cover 713.

In addition, tank rails 730 may be provided on both side surfaces of the water tank 700 in the left and right direction. The tank rail 730 is for introduction/withdrawal of the water tank 700 and may have a sliding introduction/withdrawal structure. In addition, one end of the tank rail 730 is fixed to the side surface of the water tank 700, and the other end thereof is fixed to both sides of the inner case 120 to guide the introduction/withdrawal of the water tank 700.

Meanwhile, the water tank 700 may be positioned at a position corresponding to the front surface of the bed 300 in the introduction state. In addition, a tank handle 711 may be provided on the front surface of the water tank 700, and the user may withdraw the water tank 700 by holding the tank handle 711 and pulling the tank handle 711 forward.

The water tank 700 may be withdrawn as much as a distance at which the tank cover 713 may be completely exposed, and in a state where the water tank 700 is withdrawn, the tank cover 713 is opened to be capable of being filled with water in the water tank 700.

A connection pipe 760 may be formed in the water tank 700. The connection pipe 760 may be configured such that water from the water tank 700 is supplied to the water pump 720 in a state where the water tank 700 is introduced. In addition, the connection pipe 760 may be configured to be selectively connected to the pipe connection portion 721 formed on the pump cover 740 according to the introduction/withdrawal of the water tank 700.

In detail, the connection pipe 760 may be provided in the tank cover 713, may be positioned in the center of the tank cover 713 in the left and right direction and may be provided at the rear end. Accordingly, even when the tank cover 713 is rotated for opening and closing, the connection pipe 760 may be configured not to interfere with the water tank 700.

The connecting pipe 760 may include a vertical pipe 761 extending downward from the lower surface of the tank cover 713 and a horizontal pipe 762 extending rearward from the upper end of the vertical pipe 761. The vertical pipe 761 may extend downward from the tank cover 713, wherein the vertical pipe 761 may extend to a position adjacent to the bottom surface of the tank cover 713. Accordingly, the water stored in the water tank 700 may flow upward along the vertical pipe 761.

In addition, the horizontal pipe 762 may be connected to the upper end of the vertical pipe 761 and may extend rearward. The horizontal pipe 762 may protrude further rearward than the rear surface of the water tank 700 and may extend rearward at a position corresponding to the pipe connection portion 721. The horizontal pipe 762 may be inserted into the pipe connection portion 721 in a state where the water tank 700 is fully introduced, and the water flowing upward through the vertical pipe 761 can be guided to be supplied to the pipe connection portion 721.

The horizontal pipe 762 can be completely separated from the pipe connection portion 721 in a case where the water tank 700 is withdrawn, and even if the tank cover 713 is rotated, the horizontal pipe 762 can be configured not to interfere with the pipe connection portion 721. In addition, when the rear surface of the tank cover 713 corresponding to the horizontal tube 762 is partially recessed and the horizontal tube 762 is rotated together by the rotation of the tank cover 713, the horizontal tube 762 can be prevented from interfering with the rear surface of the tank cover 713.

Meanwhile, a pump cover 740 may be provided at the rear of the water tank 700. Both ends of the pump cover 740 may be coupled to both sides of the cultivation space 101 in the left and right direction, and a front surface and an upper surface may be formed to shield the space behind the water tank 700. The bottom surface of the cultivation space 101 in which the pump cover 740 is provided is formed so that the rear half portion is stepped due to the height of the compressor 610, and the pump cover 740 may be disposed in front of the stepped portion. In addition, the water tank 700 is positioned in front of the pump cover 740. In this case, the upper surface of the water tank 700, the upper surface of the pump cover 740, and the bottom surface of the cultivation space 101 above the compressor 610 may have the same height, and can be shielded by the bed 300.

In addition, the pump cover 740 may include a pipe connection portion 721, a water pump 720, and a water supply valve 724.

In detail, the opened front surface of the pipe connection portion 721 connected to the connection pipe 760 may be exposed on one front side of the pump cover 740. The front surface of the pipe connection portion 721 may be formed at a position corresponding to the rear end of the connection pipe 760. Accordingly, when the water tank 700 is introduced, the rear end of the connection pipe 760 may be inserted into the pipe connection portion 721.

In addition, a water pump 720 may be provided on the rear surface of the pump cover 740. The water pump 720 forces the water of the water tank 700 to flow toward the bed 300, and the inlet of the water pump 720 is connected to the pipe connection portion 721 and the outlet 722 thereof may be connected to a pipe 723 connected to the water supply valve 724.

The water supply valve 724 is opened when the water pump 720 is driven so that water can be supplied toward the bed 300. A plurality of water supply valves 724 may be provided according to the number of beds 300, and one water supply valve 724 may be branched to supply water to each of the plurality of beds 300.

In this embodiment, the input side 733 of the water supply valve 724 is connected to the outlet 722 of the water pump 720 by the pipe 723, and the output side of the water supply valve 724 is branched so that the upper fitting 724b and a lower fitting 724a may be formed. In addition, an upper water supply pipe 780b and a lower water supply pipe 780a are connected to the upper fitting 724b and the lower fitting 724a, respectively, so that a structure through which independent water supply to the upper bed 300b and the lower bed 300a is possible may be provided. Accordingly, different water supply environments may be created in the upper bed 300b and the lower bed 300a, and an appropriate amount of water may be supplied to each of the upper bed 300b and the lower bed 300a.

Accordingly, the connection pipe 760 and the pipe connection portion 721, the water pump 720, the water supply valve 724, and the water supply pipe are sequentially connected, and the water in the water tank 700 by the operation of the water pump 720 may be supplied to the bed 300 through the water pump 720 and the water supply valve 724.

Meanwhile, a water level detection device 750 may be provided on the front surface of the pump cover 740. The water level detection device 750 is for detecting the water level of the water tank 700 and may include a capacitance sensor. In addition, the water level detection device 750 may be formed to protrude forward, and may be configured to be in close contact with the rear surface of the water tank 700 in a state where the water tank 700 is introduced. In a case where the water level of the water tank 700 is equal to or lower than the set water level by the water level detection device 750, the controller 190 may output through the display assembly 800 that there is no water in the water tank 700 so that the user can fill the water tank 700 with water.

A tank switch 741 may be provided on the front surface of the pump cover 740. The tank switch 741 may protrude toward the water tank 700 and may be configured to be pressed in contact with the rear surface of the water tank 700 in a state where the water tank 700 is fully introduced.

Accordingly, the tank switch 741 may detect whether a state where the water tank 700 is normally mounted and water supply is possible, and transmit it to the controller 190. When the mounting signal of the water tank 700 is not input by the tank switch 741, the water pump 720 may not be operated. In addition, the non-mounting information of the water tank 700 may be displayed on the display assembly 800 so that the user can recognize it. In addition, by maintaining the water tank 700 in a fully retracted state, the water level detection performance of the water tank 700 through the water level detection device 750 may be guaranteed.

Meanwhile, a residual water detection device 770 may be provided on the upper surface of the pump cover 740. The residual water detection device 770 is for determining whether water supplied to the lower bed 300a remains, and in order to distinguish the residual water detection device from the upper residual water detection device provided in the lower light assembly 400a, the residual water detection device 770 may be referred to as a lower residual water detection device 770. The upper residual water detection device and the lower residual water detection device 770 may have the same structure with only a difference in their mounting positions. The upper residual water detection device is defined as a residual water detection device provided with a residual water detection sensor 440 provided in the lower light assembly 400a.

In other words, the residual water detection device 770 may include a residual water detection sensor 440 capable of detecting moisture. For example, the residual water detection sensor 440 may use a capacitive sensor. The residual water detection device 770 may be configured to accurately detect whether water is present in the bed 300 by protruding upward to bring the residual water detection sensor 440 close to the lower surface of the bed 300. In order to more accurately detect whether the water remains in the bed 300, a detection portion 323 may protrude from the bed 300, and the residual water detection device 770 may have a structure in close contact with the detection portion 323.

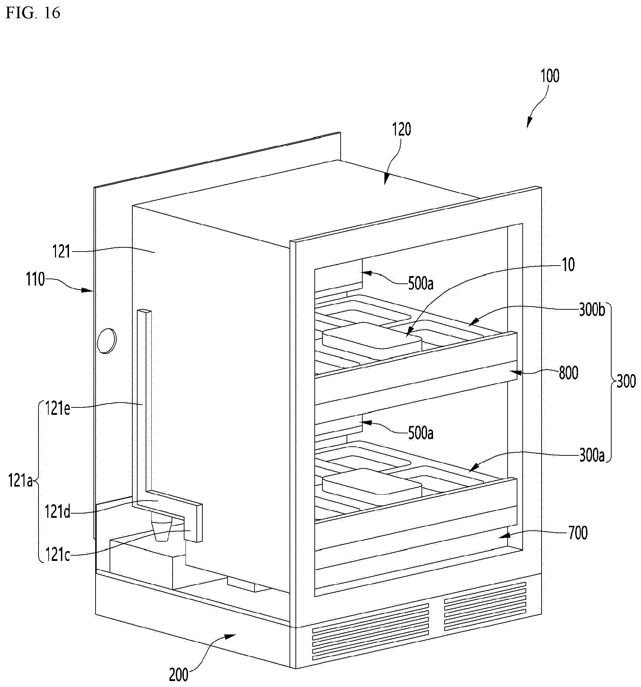

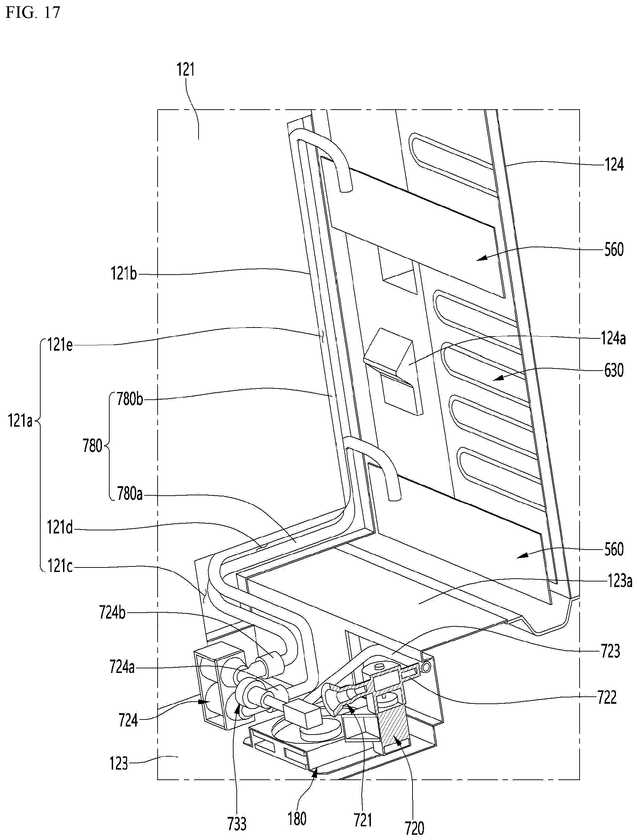

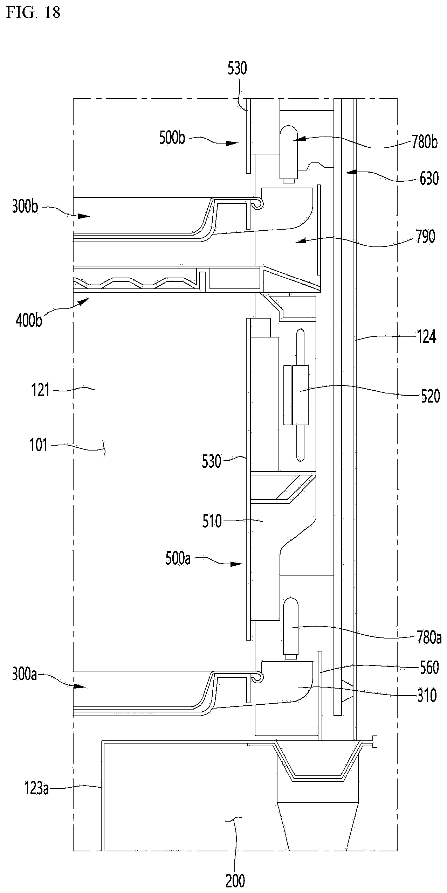

FIG. 16 is a perspective view illustrating a state where a portion of an outer case of the cabinet is removed according to an embodiment of the present disclosure, FIG. 17 is a perspective view illustrating a disposition of a water supply flow path of an apparatus for cultivating plants according to an embodiment of the present disclosure, and FIG. 18 is an enlarged view illustrating "B" of FIG. 5.

As illustrated in the drawing, the pipe connection portion 721 and the inlet of the water pump 720 may be connected to each other inside the pump cover 740. An outlet of the water pump 720 may be connected to an input side of the water supply valve 724 by the pipe 723. In addition, a water supply flow path 780 for supplying water to the bed 300 may be connected to the output side of the water supply valve 724.

When the pump cover 740 is mounted, components for supplying water may be shielded. In addition, a discharge fan 180 may be provided under the pump cover 740. The discharge fan 180 allows the air in the cultivation space 101 to be discharged to the outside via the machine room 200. The discharge fan 180 can be shielded by the pump cover 740 to prevent external exposure and may be provided on the lower surface of the cultivation space 101 adjacent to the machine room 200 so that exhaust can be made more smoothly.

Meanwhile, The pump cover 740 may shield the lower end of the pipe guide 121a recessed in the side surface of the inner case 120. The pipe guide 121a may be formed on the side plate 121 forming both side surfaces of the cultivation space 101 of the inner case 120. The pipe guide 121a may be formed to be recessed outwardly so that the water supply flow path 780 can be accommodated therein. For example, an opening 121b is formed in the side plate 121, and the pipe guide 121a formed in a shape corresponding to the outside of the opening 121b along the opening 121b may be coupled to each other. The inner case 120 may be formed of a metal material, and the pipe guide 121a may also be formed of the same material as the inner case 120. In addition, the outer surface of the pipe guide 121a may be embedded in the insulating material 102 between the outer case 110 and the inner case 120.

The pipe guide 121a may be formed in a size that can accommodate the water supply flow path 780, that is, the upper water supply pipe 780b and the lower water supply pipe 780a, and the upper water supply pipe 780b and the lower water supply pipe 780a may be disposed along the pipe guide 121a and extend to rear ends of the upper bed 300b and the lower bed 300a, respectively.

Since the pipe guide 121a is recessed from the inside to the outside of the cultivation space 101, interference by components disposed inside the cultivation space 101 may be prevented. In particular, it is possible to have a disposition structure that does not interfere with the beds 300 that are disposed to be capable of being introduced or withdrawn. In addition, it is possible to prevent the volume of the cultivation space 101 from being reduced.

In detail, the pipe guide portion 121a may include a first vertical portion 121c extending upward from the space shielded by the pump cover 740, a first horizontal portion 121d guided rearward from the first vertical portion 121c, and a second vertical portion 121e extending upward from the rear end of the first horizontal portion 121d.

Meanwhile, the lower surface of the cultivation space 101 may be formed by the lower surface plate 123 of the inner case 120, and the rear end of the lower surface plate 123 may have a stepped portion 123a to prevent interference with the compressor 610. In addition, the first vertical portion 121c and the first horizontal portion 121d may extend along the front surface and the upper surface of the stepped portion 123a, and the second vertical portion 121e may be formed to extend upward along the rear surface of the cultivation space 101.

The first vertical portion 121c communicates with the space shielded by the pump cover 740 and may serve as a passage in which the water supply flow path 780 connected to the water supply valve 724 may be introduced. In addition, the first horizontal portion 121d may be positioned on the side of the lower bed 300a mounted in the cultivation space 101 and may be covered by the lower bed 300a so as not to be exposed to the outside.

The second vertical portion 121e may extend upward along the rear end of the side plate 121 and extend somewhat higher than the upper end of the upper bed 300b to be capable of supplying water to the upper bed 300b through the water supply flow path 780.

In addition, the second vertical portion 121e may be disposed on the side of the blower assembly 500 and may be configured to be covered by the blower assembly 500. In addition, the second vertical portion 121e may further include a guide cover formed in a plate shape to shield the second vertical portion 121e. The guide cover may not only shield the second vertical part 121e, but also fix the upper water supply pipe 780b and the lower water supply pipe 780a to maintain a set position.

Hereinafter, the disposition of the water supply pipe 780 will be described in more detail. The upper water supply pipe 780b and the lower water supply pipe 780a respectively connected to the water supply valve 724 may be disposed along the pipe guide 121a. The upper water supply pipe 780b may extend above the upper bed 300b, and the lower water supply pipe 780a may extend above the lower bed 300a. The upper water supply pipe 780b and the lower water supply pipe 780a are independently disposed, and water necessary for plant growth can be independently supplied to the upper bed 300b and the lower bed 300a.

In addition, the upper water supply pipe 780b and the lower water supply pipe 780a can be guided to the position of the rear wall surface of the cultivation space 101, that is, the rear plate 124 along the pipe guide 121a recessed in the side wall of the cultivation space 101.

The upper water supply pipe 780b and the lower water supply pipe 780a are positioned in the corner regions of the rear surface and the side surface of the cultivation space 101. Accordingly, the upper water supply pipe 780b and the lower water supply pipe 780a may extend upward in a corner region where the rear plate 124 and the side plate 121 are adjacent to each other. In other words, the water supply pipes 780a and 780b are guided along the inner side of the cultivation space 101 to facilitate disposition and extend upward along the corner region of the cultivation space 101 to minimize interference with internal components.

In particular, the water supply pipes are disposed at a position separated to the side of the evaporator so as not to interfere with the evaporator 630 mounted on the front surface of the rear plate 124 and prevent water flowing along the water supply pipes 780a and 780b from freezing by the cold air of the evaporator or the temperature of the water from being excessively lowered. In addition, the water supply pipes have a structure that prevents interference with the internal components of the cabinet 100 such as the evaporator 630 and facilitates disposition work.

The upper water supply pipe 780b and the lower water supply pipe 780a have a structure of extending upward to pass through the water supply portions 310 of the upper bed 300b and the lower bed 300a, respectively, and then being bent toward the water supply portion 310 again. In this case, the positions of the upper water supply pipe 780b and the lower water supply pipe 780a may be fixed by water supply pipe mount formed on the guide cover 790, respectively.

In other words, the upper water supply pipe 780b and the lower water supply pipe 780a are configured to extend from above the bed 300 to the inside of the cultivation space 101 so that the upper water supply pipe 780b and the lower water supply pipe 780a do not interfere at all even when the bed 300 is introduced or withdrawn. In addition, in a state where the bed 300 is fully introduced, the outlets of the upper water supply pipe 780b and the lower water supply pipe 780a are positioned in the central portion of the water supply portion 310, so that water supply to the upper bed 300b and the lower bed 300a can be smoothly performed.

Meanwhile, a portion of the recessed space of the pipe guide 121a may be shielded by the guide cover 790. In addition, the guide cover 790, the upper water supply pipe 780b, and the lower water supply pipe 780a exposed to the cultivation space 101 may be shielded by the blower assembly 500.

In other words, the water supply portion 310 may be positioned further rearward than the front area of the blower assembly 500, and in particular, a portion of the upper water supply pipe 780b and the lower water supply pipe 780a protruding into the cultivation space 101 may also be positioned further rearward than the front area of the blower assembly 500. In particular, the protruding portions of the upper water supply pipe 780b and the lower water supply pipe 780a may be positioned in a space below the fan guide 510 and are positioned behind the blower cover 530 and thus can be covered without being interfered by the blower assembly 500.

Due to this structure, when the user opens the door 130 and looks at the cultivation space 101, the end portion of the upper water supply pipe 780b and the end portion of the lower water supply pipe 780a, which supply water to the upper bed 300b and the lower bed 300a may not be exposed to the outside. Accordingly, the inside of the cultivation space 101 can be seen more clearly, and a cleaner image can be provided.

Hereinafter, the structure of the bed 300 will be described in more detail with reference to the drawings. Even if a plurality of the beds 300 are provided, only one bed 300 will be described because a plurality of the beds 300 all have the same structure except for a different mounting position.

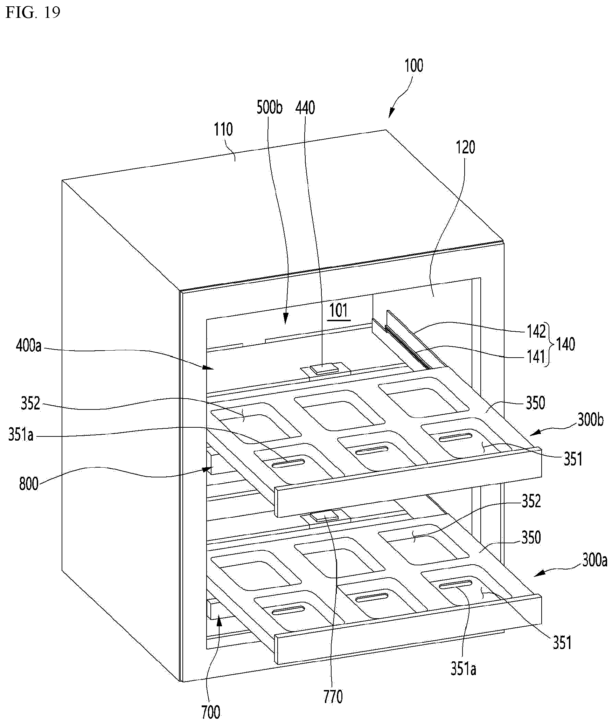

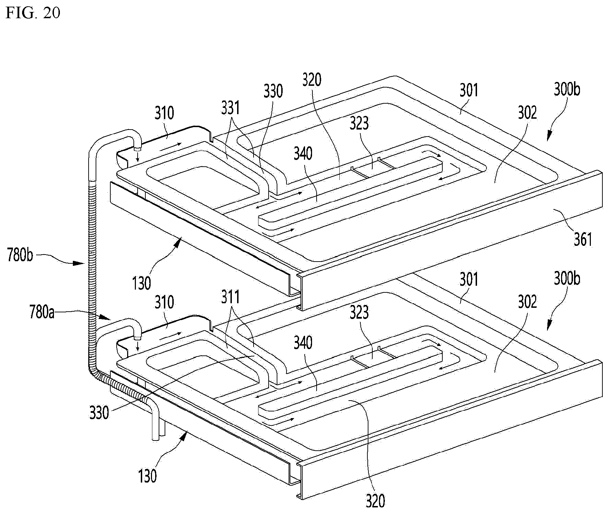

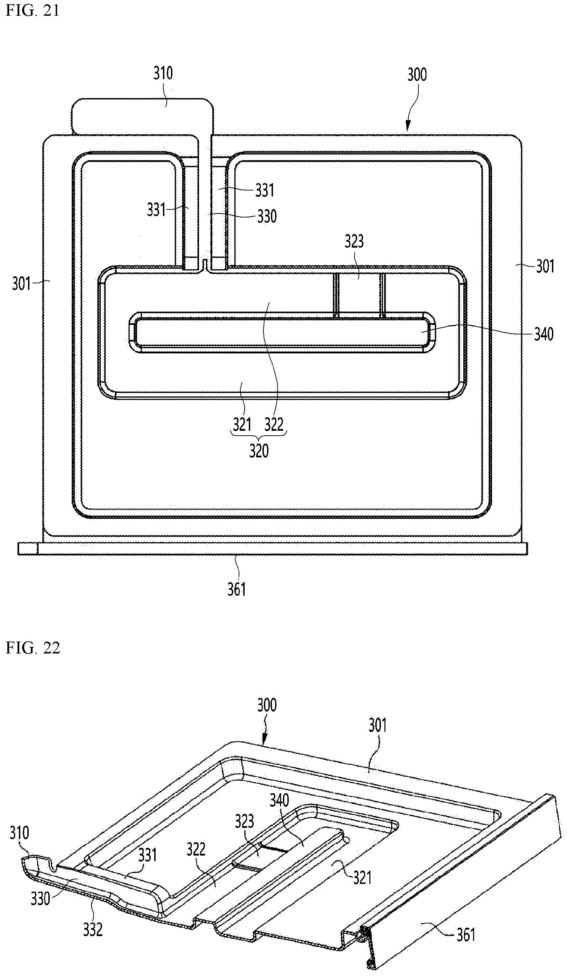

FIG. 19 is a perspective view illustrating a state where the bed of the apparatus for cultivating plants according to an embodiment of the present disclosure is withdrawn, FIG. 20 is a perspective view illustrating a disposition relationship between a bed and a water supply flow path according to an embodiment of the present disclosure, FIG. 21 is a plan view illustrating a bed according to an embodiment of the present disclosure, and FIG. 22 is a cutaway perspective view illustrating a bed according to an embodiment of the present disclosure.

As illustrated in the drawings, the bed 300 may be formed in a rectangular plate shape that partitions the cultivation space 101, and can be mounted to be introduced into/withdrawn from the cultivation space by the bed rail device 140 mounted on both sides of the cultivation space 101.

The bed rail device 140 may include a slidably extending bed rail 142 and a rail bracket 141 capable of fixing the bed rail 142 to both sides of the cultivation space 101. The bed rail 142 may have a structure extending in multiple stages and may connect between both side surfaces of the bed 300 in the left and right direction and the rail bracket 141.

The bed 300 may form a structure which is formed in a rectangular shape as a whole to provide a space in which a plurality of pods 10 are disposed and in which water supplied can be stored. In addition, the bed 300 may be formed of a plastic material to form a structure for guiding the flow of supplied water.

A bed flange 301 extending outwardly is formed around the bed 300. A bed tray 350 to be described below may be seated on the bed flange 301. In addition, the inner area of the bed flange 301 becomes an area in which the pod 10 can be disposed.

A recessed portion 302 is formed inside the bed flange 301, and the bed tray 350 may be seated in the recessed portion 302. The recessed portion 302 may be formed to accommodate the entire plurality of pod seating portions 352 formed in the bed tray 350. In addition, when the bed tray 350 is mounted, the upper surface of the bed 300 and the lower surface of the bed tray 350 may be in contact with each other and overlapped.

A water supply portion 310 may be formed at the rear end of the bed 300. The water supply portion 310 may be positioned at one end of both sides in the left and right direction and may be formed to protrude rearward from the rear end of the bed 300. In other words, the water supply portion 310 may be positioned vertically below the end portions of the water supply pipes 780a and 780b protruding from the side surface of the cultivation space 101.

The water supply portion 310 may be formed in a shape in which an upper surface is opened and a lower surface is recessed. The circumference of the water supply portion 310 protrudes to a predetermined height to prevent water supplied from the water supply pipes 780a and 780b from splashing or overflowing.

A water collection portion 320 in which water supplied through the water supply portion 310 is stored may be formed in the bed 300. The water collection portion 320 may be further recessed downward from the recessed portion 302. In addition, a water guide 330 may be recessed between the water supply portion 310 and the water collection portion 320. The water guide portion 330 may be further recessed downward from the recessed portion 302. In other words, the water guide 330 may connect the water supply portion 310 and the water collection portion 320, and the water supplied to the water supply portion 310 may be supplied to the water collection portion 320 along the water guide 330.

The water supply portion 310 is positioned higher than the water collection portion 320, and water from the water supply portion 310 may naturally flow into the water collection portion 320. In addition, the water guide 330 may be formed to have an inclination that gradually decreases from the water supply portion 310 toward the water collection portion 320. Accordingly, when water is supplied to the water supply portion 310, water may be naturally supplied to the water collection portion 320 along the water guide 330.

Meanwhile, guide walls 331 may be further formed on both sides of the water guide 330 to form the water guide 330. The guide wall 331 may extend from the water supply portion 310 to the water collection portion 320, and a pair of the guide wall may be spaced apart from each other to form both side surfaces of the water guide 330. In addition, the guide wall 331 may be formed to have a height corresponding to the height of the bed flange 301 to support the bed tray 350 from below.

The water guided from the water supply portion 310 to the water collection portion 320 by the water guide 330 may be directed toward the water collection portion 320 without overflowing to the outside. In particular, the bottom surface of the water guide 330 may be inclined at a height higher than that of the water collection portion 320 by the guide wall 331 extending upward. In addition, even in a situation where the height difference between the water supply portion 310 and the water collection portion 320 is not large, the water supplied to the water supply portion 310 does not overflow and can be directed to the water collection portion 320, and can provide a path with sufficient space to be guided smoothly. In other words, it provides a structure in which the water of the water supply portion 310 can be stably supplied without excessively deepening the recessed depth of the water collection portion 320, thereby increase in the thickness of the bed 300 in the upper and lower direction can be prevented, and thereby the bed 300 can have a slim structure.

In addition, the guide wall 331 and the water guide 330 may extend between a pair of pod seating portions 352 recessed in the bed tray 350. Accordingly, the guide wall 331 can be prevented from interfering when the bed tray 350 is seated, and a space for water supply can be secured through the space between the adjacent pod seating portions 352.

Meanwhile, in the central area of the bed 300, a water collection portion 320 for storing water supplied to the pod 10 may be recessed. The water collection portion 320 is more recessed than the bottom surface of the recessed portion 302 formed around the water collection portion 320 so that water supplied to the water supply portion 310 is existed only in the water collection portion 320 area in a state of being stored.

In detail, the water collection portion 320 is positioned in the center of the bed 300 and may extend from the left end to the right end of the bed 300. In addition, the water collection portion 320 may be formed to have a predetermined width in the front and rear direction so that all of the seating portion openings 351a formed in the bed tray 350 can be accommodated.

In addition, a bed protrusion 340 protruding upward may be formed in the central portion of the bed 300. A height of the bed protrusion 340 may be the same as or higher than that of the recessed portion 302. The bed protrusion 340 may be positioned in the center of the water collection portion 320. Accordingly, the water collection portion 320 may have a closed loop shape, and water flowing thereinto through the water guide 330 may flow along the inside of the closed loop shape of water collection portion 320. In addition, in the area of the water collection portion 320, a portion positioned in front of the bed protrusion 340 may be referred to as a front water collection portion 321, and a portion positioned at the rear of the bed protrusion 340 may be referred to as a rear side a water collection portion 322.

In addition, a distance between the outer end of the water collection portion 320 and the bed protrusion 340 may be greater than the width of the seating portion opening 351a in the front and rear direction. Accordingly, when the bed tray 350 is seated, the seating portion opening 351a may be disposed along the water collection portion 320.

The widths of a front-side water collection portion 321 and a rear-side water collection portion 322 in the front and rear direction in which the seating portion opening 351a is positioned may be the same as or slightly larger than the width of the pod seating portion 352 in the front and rear direction and there is a structure in which an appropriate amount of water required for water supply to the pod 10 can be effectively supplied to the pod 10. In addition, unnecessary water is prevented from remaining in the water collection portion 320 for a long time to prevent contamination of the bed 300 and to always maintain the bed in a clean state.

Meanwhile, a detection portion 323 may be formed in an inner area of the water collection portion 320. The detection portion 323 may be formed at a position corresponding to the residual water detection device 440, 770 positioned below. Accordingly, in a state where the bed 300 is fully introduced, the residual water detection device 440, 770 may have a structure capable of being in close contact with the detection portion 323.

In this case, the detection portion 323 may have a shape that protrudes when viewed from above and is recessed when viewed from below. Accordingly, it is possible to prevent the residual water detection device 440, 770 from interfering with the detection portion 323 in the process of introducing and withdrawing the bed 300, thereby preventing the generation of an obstacle in introducing and withdrawing the bed 300. The detection portion 323 may be positioned on the same line as the bottom surface of the water collection portion 320.

In addition, due to the structure of the protruding detection portion 323, water supplied to the detection portion 323 does not accumulate, and it is possible to accurately determine whether additional water supply is needed to the water collection portion 320.

A bed handle 361 may be formed on the front surface of the bed 300. The bed handle 361 may have a structure in which a lower surface is recessed so that a user can hold the bed handle at the time of introduction and withdrawal of the bed 300. In addition, the front surface of the bed handle 361 may be formed of the same material as the tank handle 711 or may be formed of a material of the same texture to have a sense of unity.

Meanwhile, the bed tray 350 is seated on the upper surface of the bed 300 and may form an outer appearance of an upper surface of the bed 300. The bed tray 350 may be formed of a metal material such as stainless to keep the outer appearance neat and hygienically managed.

The bed tray 350 is formed in a size capable of shielding the upper surface of the bed 300 and may be formed in a plate shape. Accordingly, in a state where the bed tray 350 is mounted on the bed 300, the upper surface of the bed 300 is formed.

In addition, a plurality of pod seating portions 352 on which the pods 10 are seated may be formed in the bed tray 350. The pod seating portion 352 is recessed in a shape corresponding to the pod 10 so that the pod 10 can be seated, and a plurality of pod seating portions 352 may be sequentially disposed. Accordingly, a plurality of the pods 10 may be disposed on the bed tray 350.

A plurality of the pod seating portions 352 may be disposed in the front half portion and the rear half portion based on the center and may be formed in the same size. In addition, a seating portion opening 351a may be formed in the pod seating portion 352. The seating portion opening 351a allows the pod protrusion 16 protruding from the lower surface of the pod 10 to pass through, and allows the pod protrusion 16 to be in contact with the water inside the water collection portion 320.

The seating portion opening 351a may be formed for each of the pod seating portions 352. In addition, the seating portion openings 351a respectively formed in the plurality of pod seating portions 352 may be disposed along an area corresponding to the water collection portion 320.

In detail, when the bed tray 350 is seated on the bed 300, the seating portion opening 351a is positioned on the water collection portion 320 so that water stored in the water collection portion 320 can be supplied to the pod 10 through the seating portion opening 351a.

In this embodiment, the water collection portion 320 is disposed in the horizontal direction in the center of the bed 300, so that the seating portion openings 351a may be also formed in a position close to the center side of the bed tray 350 to be positioned on the upper side corresponding to the inside of the water collection portion 320. In more detail, all of the seating portion openings 351a formed in the pod seating portion 352 disposed in front of the bed 300 are positioned adjacent to the rear end of the pod seating portion 352, and all the seating portion openings 351a formed in the pod seating portion 352 disposed at the rear of the bed 300 may be positioned adjacent to the front end of the pod seating portion 352. In other words, the seating portion openings 351a may be continuously disposed along the inner area of the water collection portion 320.

Hereinafter, the structure of the pod 10 and the structure in which the water of the water collection portion 320 is supplied to the pod 10 will be described in more detail with reference to the drawings.

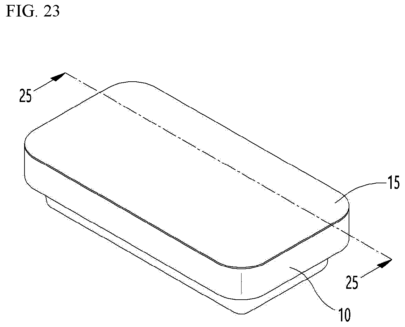

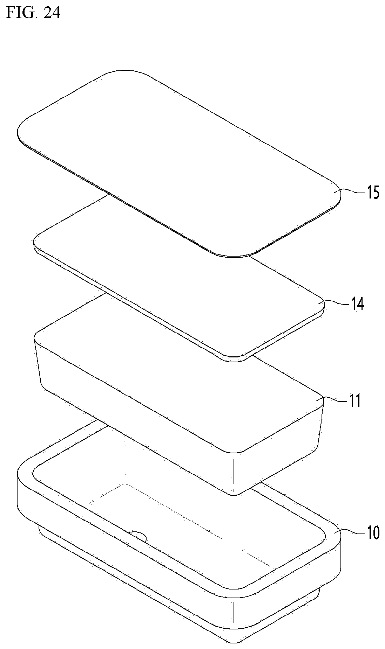

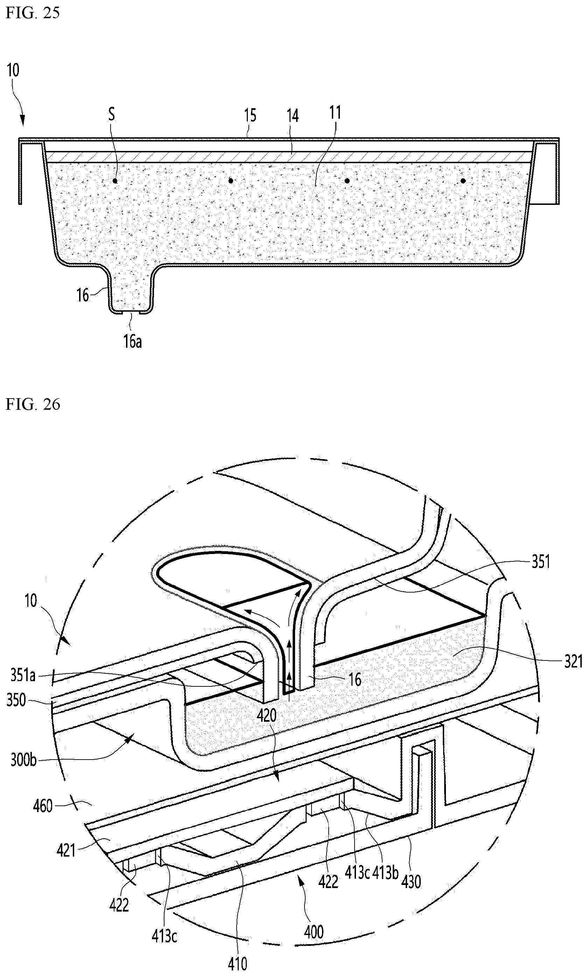

FIG. 23 is a perspective view illustrating a pod according to a first embodiment of the present disclosure, FIG. 24 is an exploded perspective view illustrating a pod according to the first embodiment of the present disclosure, FIG. 25 is a cross-sectional view illustrating a pod according to a first embodiment of the present disclosure, and FIG. 26 is an enlarged view illustrating "C" of FIG. 4.

As illustrated, the pod 10 according to the first embodiment of the present disclosure may be configured by types of plants that can be cultivated with the apparatus for cultivating plants 1. Of course, each of the pods 10 composed of several types of plants may all have the same size and may have a size set to be accommodated in the pod seating portion 352. Accordingly, the user can select a pod 10 of a plant desired to be cultivated and seat the pod at a desired position on the bed 300 to start cultivation.

In detail, the pod 10 may have an outer shape formed by a container opened upward. The pod 10 may be formed in a shape that can be placed on the pod seating portion 352. For example, the pod 10 may be formed in a polygonal shape with an open top surface. A bottom surface of the pod 10 may be supported by the pod seating portion 352. The side surface of the pod 10 may be formed to extend upwardly from the bottom surface of the pod 10. A space in which the medium 11 can be accommodated may be formed by the side and bottom surfaces of the pod 10. At the end portion of the pod 10, a bent portion bent from top to bottom is formed to perform a handle function. The bent portion may be referred to as a flange portion. The flange portion may be first bent from the upper side to the side and then secondarily bent from the side to the lower side. The first bent flange portion may be defined as the upper surface of the pod 10. When the pod 10 is seated on the pod seating portion 352, the flange portion of the pod 10 may minimize the area where the water collection portion 320 of the bed 300 is exposed to the outside. The flange portion may improve the durability of the end portion of the pod 10.

The medium 11 may be filled in the pod 10. The medium 11 may be provided as an inorganic material. In the present disclosure, it is described that the medium 11 is provided with inorganic vermiculite (hereinafter, the medium is referred to as vermiculite). The vermiculite 11 is made of a kind of brick by pressing after processing an inorganic ore into a powder state. When the medium 11 is provided as top soil containing organic material, or the like, there is a problem in that a larger amount of mold is generated in the medium 11 by the bacteria contained in the top soil or the like. Therefore, in this embodiment, the medium 11 is composed of an inorganic material, so that mold that may be generated in the medium 11 can be minimized.

Since the vermiculite 11 has fine pores capable of embracing moisture therein, the vermiculite has excellent water retention properties for maintaining moisture for a long time. Due to the shape of the vermiculite 11 expanded during the manufacturing process, a gap is formed between the different vermiculites 11, and air can pass through the gap, so that air permeability is excellent. Since the vermiculite 11 is heated to a high temperature during the manufacturing process and expanded, the vermiculite may be provided in an aseptic state.

In other words, since the vermiculite 11 has air permeability and water retention properties, it is possible to prevent mold or green algae from being generated in the pod 10. In addition, since the seeds are grown on the vermiculite 11 provided in an aseptic state, it is possible to suppress the generation of mold or green algae that may be generated in the pod 10.

The vermiculite 11 may contain a nutrient solution material (not illustrated). The nutrient solution material is a material containing nutrients that are supplied so that plants can grow better. The nutrient solution material is dissolved in water, and the water in which the nutrient solution material is dissolved may be defined as a nutrient solution. For example, the nutrient solution material may be provided in the form of a water-soluble capsule that is gradually soluble in water, and may be configured to be contained in the supply water while gradually dissolving when the supply water is supplied. The nutrient solution material may be disposed on one or more of the upper portion, the middle portion, and the lower portion of the vermiculite 11 filled in the pod 10. The nutrient solution material may be supplied to the plant while gradually dissolving in the supply water while the supply water flows from the lower portion to the upper portion of the vermiculite 11.

For example, when the nutrient solution material is positioned adjacent to the lower portion of the vermiculite 11, the nutrient solution material may be uniformly dissolved in the supply water and supplied to the plant. When the nutrient solution material is positioned adjacent to the upper portion of the vermiculite 11, it can be relatively slowly dissolved in the supply water than the nutrient solution material adjacent to the lower portion of the vermiculite 11 and supplied to the plant. The disposition position of the nutrient solution material may be changed according to the characteristics and functions of the nutrient solution material.

A plurality of seeds S may be disposed in the vermiculite 11 to have a predetermined arrangement. The seed S may be positioned inside the vermiculite 11. The seed S may be grown by the supply water supplied from the bed 300 and the nutrient solution material dissolved in the supply water. A seed fixing guide for preventing the plurality of seeds S from moving inside the vermiculite 11 may be further disposed inside the vermiculite 11. The seed S may be positioned inside the vermiculite 11, but may be placed on the upper surface of the vermiculite 11.

The upper surface of the pod 10 is covered with a protective paper 15 to protect the inside thereof. In particular, a packing member 14 is further provided between the upper surface of the vermiculite 11 and the protective paper 15 to protect the vermiculite 11 from the external environment. In addition, the type of plant to be cultivated may be printed on one surface of the protective paper 15 to provide information about the pod 10 to the user. The packing member 14 is seated on the upper surface of the vermiculite 11 and is in close contact with the side surface of the pod 10 to prevent movement of the vermiculite 11. At least one of the packing member 14 and the protective paper 15 may be provided to the pod 10. For example, when the protective paper 15 is not provided, the type of plant may be printed on the upper surface of the packing member 14. In addition, when the packing member 14 is not provided, the protective paper 15 may be provided on the upper surface of the vermiculite 11.

Meanwhile, a protrusion 16 protruding downward is formed on the bottom surface of the pod 10, and a water-through hole 16a may be formed on the bottom surface of the protrusion 16. The protrusion 16 may be formed in a pipe structure with an empty inside while being opened up and down. The water-through hole 16a may be formed to have at least one opening.

The vermiculite 11 is positioned within the protrusion 16, and water supplied to the beds 300a and 300b may be absorbed by the vermiculite 11. The supply water absorbed by the vermiculite 11 disposed in the protrusion 16 may be uniformly supplied to the entire area of the vermiculite 11 disposed in the pod 10. In order to prevent the vermiculite 11 from falling off into the beds 300a and 300b through the water-through hole 16a, the water-through hole 16a may be configured as a porous portion formed as an opening having a size smaller than that of the vermiculite 11.

In the present embodiment, it is described that the vermiculite 11 is positioned in the protrusion 16, but a water absorbing member may be further included in the protrusion 16. The vermiculite 11 may be in contact with the upper surface of the water absorbing member. The water absorbing member may absorb the water supplied to the beds 300a and 300b and deliver the water to the vermiculite 11. When the water absorbing member is positioned within the protrusion 16, the water absorbing member prevents the vermiculite 11 from falling into the beds 300a and 300b, thereby increasing the size of the water-through hole 16a.

Hereinafter, a structure in which the water of the water collection portion 320 is supplied to the pod 10 will be described.

When the pod 10 is seated on the pod seating portion 352, the pod protrusion 16 may protrude downward through the seating portion opening 351a. At this time, the pod protrusion 16 is positioned inside the water collection portion 320, that is, the front water collection portion 321.

When water is supplied to the inside of the water collection portion 320 in this state, the pod protrusion 16 can come into contact with the water inside the water collection portion 320. In addition, the water of the water collection portion 320 may flow in through the water-through hole 16a, and the water can be absorbed into the inside of the pod 10 along the vermiculite 11 positioned inside the pod protrusion 16.

Water flowing into the pod 10 through the pod protrusion 16 may be evenly spread by the vermiculite 11 filled in the pod 10. The supply water evenly spread to the vermiculite 11 contains a nutrient solution material, and plants can grow by the supply water and the nutrient solution material.

Hereinafter, an operation of the apparatus for cultivating plants 1 according to an embodiment of the present disclosure having the above structure will be described.

The user selects a plant to be cultivated, removes the protective paper 15 of the corresponding pod 10, and then seats the plant on the bed 300. When the pod 10 is seated on the bed 300, a predetermined amount of water stored in the water tank 700 is supplied to the bed 300.

At this time, the amount of water supplied is a set amount and may be slightly less than the amount to be sufficiently supplied to the pod 10. Accordingly, the supplied water may be absorbed from the water collection portion 320 to the pod 10, and when a predetermined time elapses, the supplied water is completely absorbed so that no water remains in the water collection portion 320.

When the residual water detection device 440, 770 detects that there is no water in the water collection portion 320, the residual water detection device 742 supplies again the predetermined amount of water and again detects that there is no water left in the water collection portion 320, the controller 190 detects the time at this time and thus determines whether the set time has elapsed.

While repeating this process, the predetermined amount of water is continuously supplied and the time taken to be absorbed by the pod 10 is measured. If the time for which no water remains in the water collection portion 320 after water supply has elapsed for a set time, it is determined that sufficient water has been supplied and the water supply is stopped for a certain period of time. In addition, when the conditions for supplying water again are satisfied, watersupply is started again.

Accordingly, the water collection portion 320 does not maintain a state of being accommodated for a long time, and the amount of water required for plant growth can be supplied in a timely manner. In addition, nutrients necessary for plant growth are supplied in the form of a nutrient solution contained in the pod 10 so that the plants inside the pod 10 can grow effectively.

Light is irradiated toward the plant growing in the bed 300 by the operation of the light assembly 400. The light assembly 400 may be turned on and off at an appropriate time period according to the growth state and environment of the plant. In particular, by turning the light assembly 400 on and off according to the actual amount of sunlight according to the season, it is possible to provide an environment similar to that in which plants inside the apparatus for cultivating plants 1 grow in an external natural environment.

Plants in the bed 300 perform photosynthesis by the light provided by the light assembly 400, and carbon dioxide necessary for this process may be supplied through the air flowing into the cultivation space. The carbon dioxide may be supplied by external air flowing into the cultivation space 101 when the door 130 is opened. In addition, a separate flow path for supplying external air containing carbon dioxide to the cultivation space 101 may be formed in the cabinet 100. Carbon dioxide may be supplied to the cultivation space 101 by including a flow path through which a portion of the air suctioned into the grill suction port 221 flows into the cultivation space 101. For example, a flow path for supplying the carbon dioxide may be formed below the evaporator 630. In addition, a carbon dioxide generator for supplying carbon dioxide to the cultivation space 101 may be provided inside the cabinet 100. However, in order to prevent airborne bacteria contained in the outside air from flowing into the cultivation space 101, a sterilizing device for sterilizing the outside air or a filter member for filtering the airborne bacteria may be further included.

In a case where the temperature inside the cultivation space 101 is too low, the heater is driven, and in a case where the temperature inside the cultivation space 101 is too high, the refrigeration cycle is driven and the evaporator 630 performs a cooling action.

Air heated or cooled by the heater or evaporator 630 is discharged forward through the blower assembly 500. At this time, air flows from the rear end of the light assembly 400 to the front, and the lower surface of the light assembly 400 is cooled during the air flow process.

Then, the air moved forward is moved downward and then flows from the front end of the bed 300 to the rear end of the bed 300. Stems and leaves of plants grown in the bed 300 are shaken by the flow of air flowing from the upper surface of the bed 300, so that the state of the cultivated plants can be remarkably improved.

The air flowing into the rear end of the bed 300 passes through again the space in which the evaporator 630 and the heater are disposed and may be discharged toward the light assembly 400 by the blower fan 520.

The air flowing by the operation of the blower fan 520 circulates inside the cultivation space 101, and continuously air-cools the light assembly 400 during the circulation process and facilitates the growth of food in the bed 300.

In addition, by continuously and uniformly heating and cooling the inside of the cultivation space 101 through a repeated air circulation process, the entire cultivation space 101 may maintain a set temperature.

The user can check the state inside the cultivation space 101 through the door 130, and when the plants in the cultivation space 101 reach a harvestable state, the plants are harvested. In addition, if plant management is necessary before harvest, an appropriate operation is performed, and unnecessary crops may be discarded or the harvested pod 10 may be separated from the bed 300 and be removed.

This harvesting and management operation may be performed by a user along the guidance through the display assembly 800, or information may be transmitted to a device carried by the user to guide the user's harvesting and management operation.

Hereinafter, the pod 10 according to various embodiments of the present disclosure will be described.

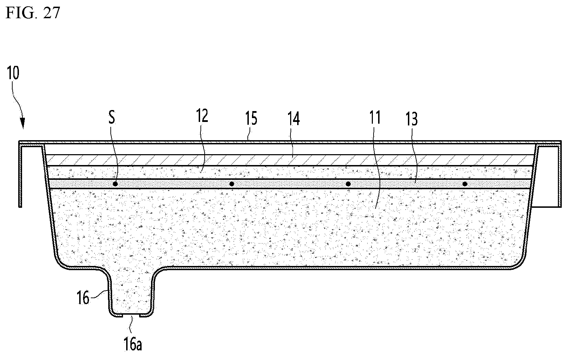

FIG. 27 is a cross-sectional view illustrating a pod according to a second embodiment of the present disclosure.

The pod 10 according to the second embodiment of the present disclosure is characterized in that a portion of the pod 10 according to the first embodiment is deformed. Therefore, the description of the pod 10 according to the second embodiment may refer to a portion of the description of the pod 10 according to the first embodiment. Hereinafter, the pod 10 according to the second embodiment partially modified from the pod 10 according to the first embodiment will be described in detail.

As illustrated, the media 11 and 12 may be filled inside the pod 10 according to the second embodiment. The media 11 and 12 may be provided with inorganic vermiculite. A seed paper 13 may be further provided inside the media 11 and 12. The media 11 and 12 may include a lower medium 11 positioned below the seed paper 13 and an upper medium 12 positioned above the seed paper 13. The lower medium 11 may be referred to as lower vermiculite, and the upper medium 12 may be referred to as upper vermiculite.

The seed paper 13 may be composed of a sheet in which the seeds S are disposed to have a predetermined arrangement. For example, the seed paper 13 may be provided as a sheet having a starch ingredient. When supply water is supplied in a state where the seed paper 13 is seated on the upper surface of the lower medium 11, the seed paper 13 melts and disappears, and the seeds S remain in the lower medium 11. The upper medium 12 seated on the upper surface of the seed paper 13 may perform a function for adjusting moisture and humidity of the soil and preventing mold or green algae generation. Without being limited to this idea, the seed paper 13 may be placed on the upper surface of the upper medium 12.

Meanwhile, the seed paper 13 does not melt and disappear by the supply water and may perform the function of a support layer for supporting the seeds S between the lower medium 11 and the upper medium 12. In this case, the seed paper 13 may be provided as a fabric having water retention properties for maintaining moisture supplied by the lower medium 11 and air permeability for allowing air to pass through.

A first height at which the lower medium 11 is provided in the pod 10 may be greater than a second height at which the upper medium 12 is provided. The first height may be understood as a length from the bottom surface of the pod 10 to the top surface of the lower medium 11. The second height may be understood as a length from the top surface of the seed paper 13 to the top surface of the upper medium 12. The lower medium 11 may be provided more than the upper medium 12 in order to maintain the moisture required while the seeds (S) grow for a long time. The upper medium 12 may be provided less than the lower medium 11 to adjust moisture and humidity of the seed paper 13.

The pod 10 may further be provided with one or more of the packing member 14 and the protective paper 15. One or more of the packing member 14 and the protective paper 15 may be positioned above the upper medium 12.

Meanwhile, one or more of the upper medium 12 and the lower medium 11 may contain a nutrient solution material. In this embodiment, it will be described that the nutrient solution material is provided in the lower medium 11. When the nutrient solution material is provided in the lower medium 11, the nutrient solution material may be included in the supply water while the supply water suctioned into the protrusion 16 is evenly spread to the lower medium 11. The supply water containing the nutrient solution material may be supplied to the seed paper 13 and the upper medium 12.

According to the present disclosure, since the seed paper 13 for supporting the seeds S is provided between the upper medium 12 and the lower medium 11, in the process of transferring the pods 10, it is possible to prevent the disposition position of the seeds S from being changed.

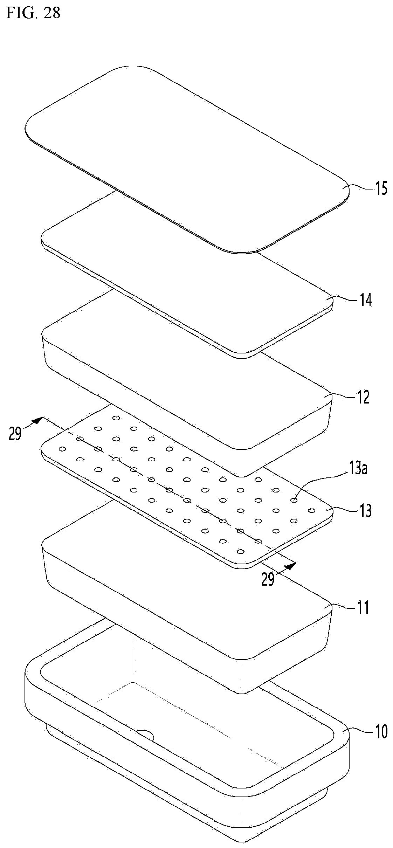

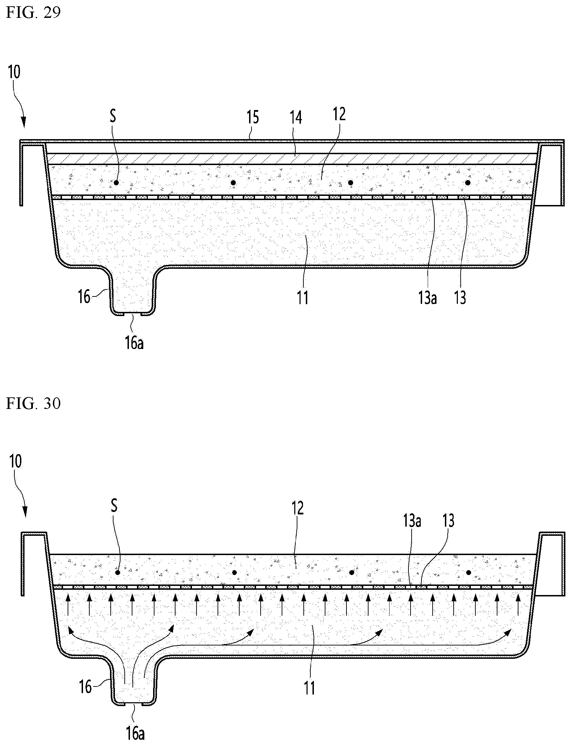

FIG. 28 is an exploded perspective view illustrating a pod according to a third embodiment of the present disclosure, FIG. 29 is a cross-sectional view illustrating a pod according to a third embodiment of the present disclosure, and FIG. 30 is a view illustrating a state where water is supplied to the inside of the pod according to the third embodiment of the present disclosure.

As illustrated, in the pod 10 according to the third embodiment of the present disclosure, plants that can be cultivated by the apparatus for cultivating plants 1 may be configured by type. Of course, each of the pods 10 composed of several types of plants all may have the same size and may have a size set to be accommodated in the pod seating portion 352. Accordingly, the user can select the pod 10 of the plant desired to be cultivated and seated at a desired position on the bed 300 to start cultivation.

In detail, the pod 10 may have an outer shape formed by a container opened to the top. The pod 10 may be formed in a shape that can be placed on the pod seating portion 352. For example, the pod 10 may be formed in a polygonal shape with an opened top surface. A bottom surface of the pod 10 may be supported by the pod seating portion 352. The side surface of the pod 10 may be formed to extend upwardly from the bottom surface of the pod 10. A space in which the media 11 and 12 can be accommodated may be formed by the side and bottom surfaces of the pod 10. At the end portion of the pod 10, a bent portion bent from top to bottom is formed to perform a handle function. The bent portion may be referred to as a flange portion. The flange portion may be first bent from the upper side to the side and then secondarily bent from the side to the lower side. The first bent flange portion may be defined as the upper surface of the pod 10. When the pod 10 is seated on the pod seating portion 352, the flange portion of the pod 10 may minimize the area where the water collection portion 320 of the bed 300 is exposed to the outside. The flange portion may improve the durability of the end portion of the pod 10.

Media 11 and 12 may be filled in the pod 10. The media 11 and 12 may include a first medium 11 and a second medium 12. The first medium 11 and the second medium 12 may be disposed in a vertical direction, and the second medium 12 may be positioned above the first medium 11. The first medium 11 may receive water from the water collection portion 320 and deliver water to the second medium 12. A seed S may be disposed in the second medium 12.

The first medium 11 may be referred to as a lower medium since the first medium is positioned in the lower space within the pod 10. The second medium 12 may be referred to as an upper medium since the second medium is positioned in the upper space within the pod 10. Alternatively, the lower medium 11 may be referred to as a high-humidity medium since the lower medium holds more moisture than the upper medium 12, and the upper medium 12 may be referred to as a low-humidity medium. Alternatively, the lower medium 11 may be referred to as a moisture absorbing member for absorbing water, and the upper medium 12 may be referred to as a moisture retention member for maintaining water for a long time.

The lower medium 11 may be composed of a material having better absorbency than the upper medium 12. The upper medium 12 may receive water from the lower medium 11 and deliver the supplied water to the seeds S. For example, the lower medium 11 may be provided as an inorganic and porous absorbent material or a porous suction member such as vermiculite and a sponge. The upper medium 12 may be composed of a material with excellent water retention properties that can hold moisture supplied from the lower medium 11 for a long time to create an environment for germination of the seeds S. For example, the upper medium 12 may be provided with a water-retention material such as a sponge or floral foam (oasis foam). The upper medium 12 may be made of a material having more air permeability together with water retention properties in order to prevent the seeds S from spoiling due to retained moisture.

One or more of the upper medium 12 and the lower medium 11 may include a nutrient solution material (not illustrated). The nutrient solution material is a material containing nutrients that are supplied so that plants can grow better. For example, the nutrient solution material may be provided in the form of a water-soluble capsule that is gradually soluble in water and may be configured to be contained in the supply water while gradually dissolving when the supply water is supplied. The nutrient solution material may be supplied to the plant while gradually dissolving in the supply water while the supply water flows from the lower medium 11 toward the upper medium 12.

For example, when the nutrient solution material is positioned in the lower medium 11, the nutrient solution material may be uniformly dissolved in the supply water and supplied to the plants. When the nutrient solution material is positioned in the upper medium 12, the nutrient solution material can be supplied to the plant by dissolving the nutrient solution material in the supply water relatively slowly. The disposition position of the nutrient solution material may be changed according to the characteristics and functions of the nutrient solution material.

A plurality of seeds S may be disposed in the upper medium 12 to have a predetermined arrangement. The seed S may be positioned inside the upper medium 12. A seed groove placed on the seed S may be formed in the upper medium 12. The seed groove may be formed by recessing the upper surface of the upper medium 12 downward. The seed S may be grown by the supply water supplied from the bed 300 and the nutrient solution material dissolved in the supply water. The seed S may be positioned inside the upper medium 12 but may also be placed on the upper surface of the upper medium 12.

A moisture separation membrane 13 may be included between the upper medium 12 and the lower medium 11. The moisture separation membrane 13 may be divided by separating the upper medium 12 and the lower medium 11. The moisture separation membrane 13 may have a moisture-passage hole 13a through which the supply water passes. The moisture-passage hole 13a communicates the upper medium 12 from the lower medium 11 with each other to allow the supply water to flow. The moisture-passage hole 13a may have a plurality of openings arranged at regular intervals. The moisture separation membrane 13 may be composed of a sheet of a waterproof material to divide moisture in the upper medium 12 and moisture in the lower medium 11. The supply water supplied to the lower medium 11 may be supplied to the upper medium 12 through the moisture-passage hole 13a. When the moisture separation membrane 13 is provided between the upper medium 12 and the lower medium 11, the flow rate of the supply water transferred from the lower medium 11 to the upper medium 12 can be maintained uniformly.

In detail, since the moisture separation membrane 13 adjusts the flow rate of the supply water so that the supply water supplied to the lower medium 11 is evenly spread throughout the lower medium 11 and then supplied to the upper medium 12, it is possible to relatively uniformly supply the supply water to the upper medium 12.

The upper surface of the pod 10 may be covered with a protective paper 15 to protect the inside thereof. In particular, a packing member 14 is further provided between the upper surface of the upper medium 12 and the protective paper 15 to protect the upper medium 12 from the external environment. In addition, the type of plant to be cultivated may be printed on one surface of the protective paper 15 to provide the user with information about the pod 10. The packing member 14 is seated on the upper surface of the upper medium 12 and is in close contact with the side of the pod 10 to prevent movement of the upper medium 12. One or more of the packing member 14 and the protective paper 15 may be provided on the pod 10. For example, when the protective paper 15 is not provided, the type of plant may be printed on the upper surface of the packing member 14. In addition, when the packing member 14 is not provided, the protective paper 15 may be provided on the upper surface of the upper medium 12.

Meanwhile, a protrusion 16 protruding downward is formed on the bottom surface of the pod 10, and a water-through hole 16a may be formed on the bottom surface of the protrusion 16. The protrusion 16 may be formed in a pipe structure with a hollow inside while being opened up and down. The water-through hole 16a may be formed to have one or more openings.

A portion of the lower medium 11 is positioned within the protrusion 16, and water supplied to the beds 300a and 300b may be absorbed by a portion of the lower medium 11. The supply water absorbed by a portion of the lower medium 11 disposed in the protrusion 16 may be uniformly supplied to the entire portion of the lower medium 11 disposed in the pod 10. In order to prevent the lower medium 11 from falling off to the beds 300a and 300b through the water-through hole 16a, the water-through hole 16a may consist of a porous portion formed as an opening having a size smaller than that of the lower medium 11. The size and number of the water-through holes 16a may be variously modified.

In the present embodiment, it is described that a portion of the lower medium 11 is positioned in the protrusion 16, but a water absorbing member may be further provided in the protrusion 16. The lower medium 11 may be in contact with the upper surface of the water absorbing member. The water absorbing member may absorb the water supplied to the beds 300a and 300b and deliver the water to the lower medium 11. When the water absorbing member is positioned within the protrusion 16, the lower medium 11 is prevented from falling off into the beds 300a and 300b by the water absorbing member, thereby increasing the size of the water-through hole 16a.

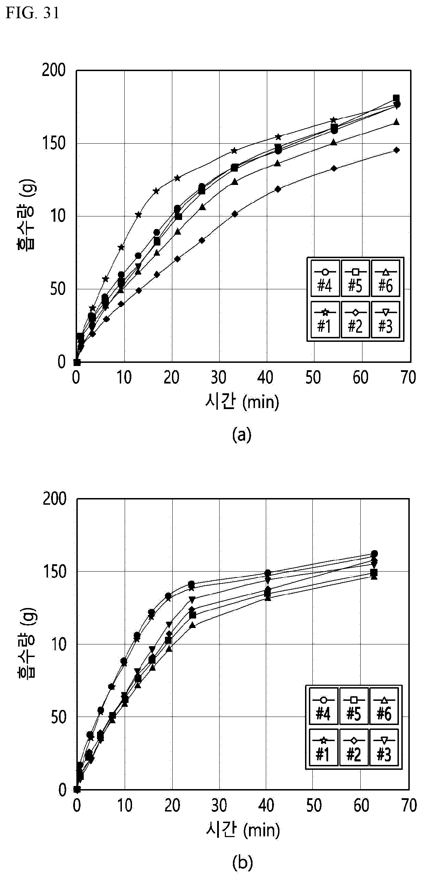

FIG. 31 is a graph illustrating the absorption amount and time of water absorbed into the medium according to the third embodiment of the present disclosure.

FIG. 31 (a) is a graph illustrating the absorption amount and time of water absorbed into the medium of the pod which is not provided with the moisture separation membrane 13, and FIG. 31 (b) is a graph illustrating the absorption amount and time of water absorbed into the medium of the pod which is provided with the moisture separation membrane 13.

#1 to #3 may be define the first to third pods positioned in the front side water collection portion 321, and #4 to #6 may be defined as fourth to sixth pods positioned in the rear side water collection portion 322. The first to third pods may be disposed from the left to the right of the front side water collection portion 321, and the fourth to sixth pods may be disposed from the left to the right of the rear side water collection portion 322.

Referring to FIG. 31 (a), the amount of water absorbed into the medium of the pod increases as time increases. The absorption amount absorbed by the pods may be different for each of the first to sixth pods. The absorption amount absorbed into the pod may be different according to the state and type of the medium filled in the pod and the time when water starts to be absorbed from the water collection portion 320 into the medium of the different pods. Since the absorption amount per hour absorbed by the first to sixth pods is different, there is a difference in the amount of water supplied to the different pods. In other words, there is a problem that water is not uniformly supplied to the first to sixth pods.

Referring to FIG. 31 (B), in the pod 10 according to the embodiment of the present disclosure, a moisture separation membrane 13 is disposed between the upper medium 12 and the lower medium 11. The lower medium 11 has excellent absorbency to quickly absorb water from the water collection portion 320, and the upper medium 12 has excellent water retention properties to maintain water supplied from the lower medium 11 for a long time. Water of the lower medium 11 may be supplied to the upper medium 12 through the moisture-passage hole 13a of the moisture separation membrane 13. Since water can flow only through the moisture-passage hole 13a, the water in the lower medium 11 can be uniformly supplied to the upper medium 12.

According to the present disclosure, since water can be uniformly supplied to the medium by the moisture separation membrane 13 to the first to sixth pods, the difference in the amount of water supplied to different pods can be minimized.

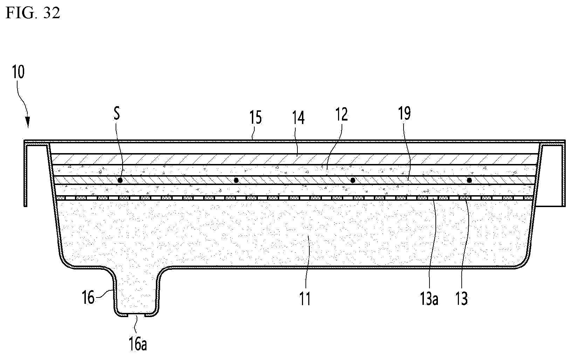

FIG. 32 is a cross-sectional view illustrating a pod according to a fourth embodiment of the present disclosure.

The pod 10 according to the fourth embodiment of the present disclosure is characterized in that a portion of the pod 10 according to the third embodiment is deformed. Therefore, the description of the pod 10 according to the third embodiment may refer to a portion of the description of the pod 10 according to the third embodiment. Hereinafter, the pod 10 according to the fourth embodiment partially modified from the pod 10 according to the third embodiment will be described in detail.

As illustrated, the media 11 and 12 may be filled inside the pod 10. The media 11 and 12 may include a first medium 11 and a second medium 12. A moisture separation membrane 13 may be provided between the first medium 11 and the second medium 12. The medium positioned above the moisture separation membrane 13 is referred to as an upper medium and may be defined as a region in which the seeds S are positioned. The medium positioned below the moisture separation membrane 13 is referred to as a lower medium and may be defined as a region for absorbing water. The upper medium 12 may be referred to as a moisture retention portion since the upper medium has a function for maintaining the moisture of the seeds S. The lower medium 11 may also be referred to as a moisture absorption portion since the lower medium functions to supply moisture to the upper medium 12.

A seed paper 19 may be further provided inside the upper medium 12. A portion of the upper medium 12 may be positioned below the seed paper 19, and another portion of the upper medium 12 may be positioned above the seed paper 19.

The seed paper 19 may be composed of a sheet in which the seeds S are disposed to have a predetermined arrangement. For example, the seed paper 19 may be provided as a sheet having a starch ingredient. When supply water is supplied from the lower medium 11 to the upper medium 12, the seed paper 19 melts and disappears and the seeds S remain in the upper medium 12. The other portion of the upper medium 12 positioned above the seed paper 19 may perform a function for adjusting moisture and humidity and preventing mold or green algae generation. Without being limited to this idea, the seed paper 19 may be placed on the upper surface of the upper medium 12.

Meanwhile, the seed paper 19 does not melt and disappears by the supply water and may perform the function of a support layer for supporting the seeds S in the interior of the upper medium 12. In this case, the seed paper 19 may be provided as a fabric having water retention properties for maintaining moisture in the upper medium 12 and air permeability through which air can pass.

The pod 10 may further be provided with one or more of the packing member 14 and the protective paper 15. One or more of the packing member 14 and the protective paper 15 may be positioned above the upper medium 12. One or more of the packing member 14 and the protective paper 15 may indicate the type of plant and may prevent the medium 11 from being separated to the outside through the cover hole 17a.

Meanwhile, one or more of the upper medium 12 and the lower medium 11 may contain a nutrient solution material. In this embodiment, it will be described that the nutrient solution material is provided in the lower medium 11. When the nutrient solution material is provided to the lower medium 11, the nutrient solution material may be provided in the supply water while the supply water suctioned into the protrusion 16 is evenly spread to the lower medium 11. After the supply water containing the nutrient solution passes through the moisture-passage hole 13a of the moisture separation membrane 13, the supply water may be supplied to the seed paper 19 and the upper medium 12.

According to the present disclosure, since the seed paper 19 for supporting the seed S is provided inside the upper medium 12, the disposition position of the seed S in the process of transferring the pod 10 can be prevented from being changed. In addition, since the supply water supplied from the lower medium 11 is uniformly supplied to the upper medium 12 by the moisture separation membrane 13, sufficient moisture and nutrient solution material can be supplied to the seeds S.

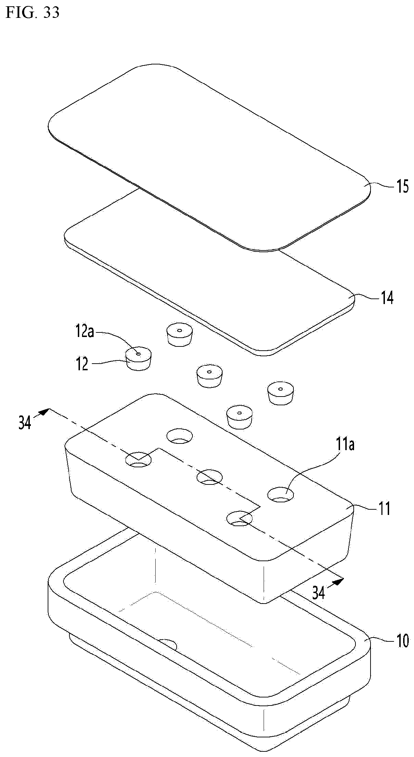

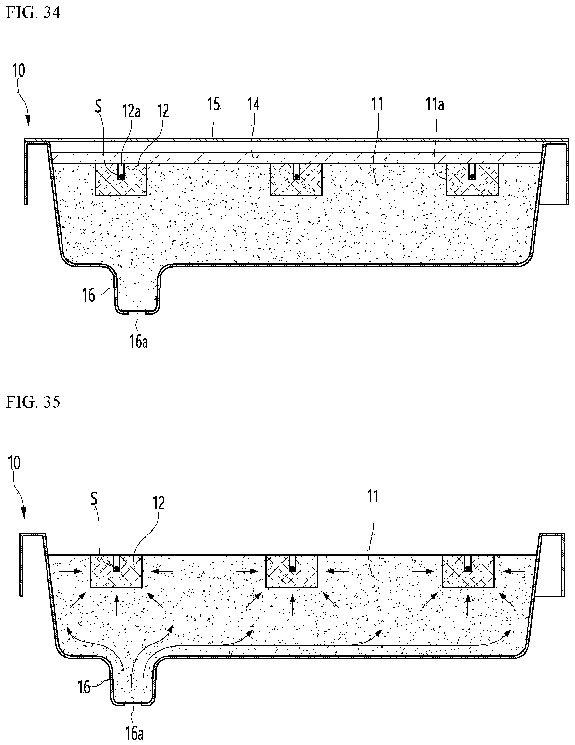

FIG. 33 is an exploded perspective view illustrating a pod according to a fifth embodiment of the present disclosure, FIG. 34 is a cross-sectional view illustrating a pod according to a fifth embodiment of the present disclosure, and FIG. 35 is a view illustrating a state where water is supplied to the inside of the pod according to the fifth embodiment of the present disclosure.

As illustrated, in the pod 10 according to the fifth embodiment of the present disclosure, plants that can be cultivated by the apparatus for cultivating plants 1 may be configured by type. Of course, each of the pods 10 composed of several types of plants may all have the same size and may have a size set to be accommodated in the pod seating portion 352. Accordingly, the user can select the pod 10 of the plant desired to be cultivated and seated at a desired position on the bed 300 to start cultivation.

In detail, the pod 10 may have an outer shape formed by a container opened to the top. The pod 10 may be formed in a shape that can be placed on the pod seating portion 352. For example, the pod 10 may be formed in a polygonal shape with an opened top surface. A bottom surface of the pod 10 may be supported by the pod seating portion 352. The side surface of the pod 10 may be formed to extend upwardly from the bottom surface of the pod 10. A space in which the medium 11 can be accommodated may be formed by the side and bottom surfaces of the pod 10. At the end portion of the pod 10, a bent portion bent from top to bottom is formed to perform a handle function. The bent portion may be referred to as a flange portion. The flange portion may be first bent from the upper side to the side and then secondarily bent from the side to the lower side. The first bent flange portion may be defined as the upper surface of the pod 10. When the pod 10 is seated on the pod seating portion 352, the flange portion of the pod 10 may minimize the area where the water collection portion 320 of the bed 300 is exposed to the outside. The flange portion may improve the durability of the end portion of the pod 10.

The medium 11 may be filled in the pod 10. The medium 11 may be provided as an inorganic material. The medium 11 is configured for absorbing water and may be referred to as an water absorbing medium. In the present disclosure, it is described that the medium 11 is provided with inorganic vermiculite (hereinafter, the medium is referred to as vermiculite). The vermiculite 11 is made of a kind of brick by pressing after processing an inorganic ore into a powder state. When the medium 11 is provided as top soil containing organic material or the like, there is a problem in that a larger amount of mold is generated in the medium 11 due to the bacteria contained in the top soil or the like. Therefore, in this embodiment, the medium 11 is composed of an inorganic material, so that mold that may be generated in the medium 11 can be minimized.

Since the vermiculite 11 has fine pores capable of embracing moisture therein, it has excellent water retention properties for maintaining moisture for a long time. Due to the shape of the vermiculite 11 expanded during the manufacturing process, a gap is formed between the different vermiculites 11, and air can pass through the gap, so that air permeability is excellent. Since the vermiculite 11 is heated to a high temperature during the manufacturing process and expanded, the vermiculite may be provided in an aseptic state.

In other words, since the vermiculite 11 has air permeability and water retention properties, it is possible to prevent mold or green algae from being generated in the pod 10. In addition, since the seeds are grown on the vermiculite 11 provided in an aseptic state, it is possible to suppress the generation of mold or green algae that may be generated in the pod 10.

The vermiculite 11 may further be provided with a seed medium 12. The seed medium 12 may be arranged at regular intervals on the vermiculite 11. The vermiculite 11 may be referred to as a first medium, and the seed medium 12 may be referred to as a second medium. A medium insertion groove 11a into which the seed medium 12 is inserted may be formed in the vermiculite 11. The medium insertion groove 11a may be formed at a position corresponding to the seed medium 12. The medium insertion groove 11a may be formed by recessing the upper surface of the vermiculite 11 downward. The medium insertion groove 11a may be formed to correspond to the seed medium 12. The seed S may be accommodated in the seed medium 12. In this embodiment, the medium insertion groove 11a is described as being formed on the upper surface of the vermiculite 11, but when the seed medium 12 is positioned in the vermiculite 11, the medium insertion groove 11a may be positioned inside the vermiculite 11. In addition, the opened upper surface of the medium insertion groove 11a may be covered by a portion of the vermiculite 11.

The seed medium 12 may be formed with a seed insertion groove 12a into which the seed S is inserted. The seed insertion groove 12a may be formed by being recessed downward from the top surface of the seed medium 12. The seed insertion groove 12a is a groove for inserting the seed S and may be blocked after inserting the seed S into the seed medium 12. In this embodiment, the seed insertion groove 12a is described as being recessed downward from the top surface of the seed medium 12, but may be formed so as to be recessed toward the center of the seed medium 12 from the side and bottom of the seed medium 12.

The seed medium 12 may be composed of a material having excellent water retention properties that can hold moisture for a long time to create an environment for germination of the seeds S. For example, the seed medium 12 may be provided with a water retention material such as a porous water absorbing member such as a sponge, a floral foam (oasis foam), or the like. The seed medium 12 may receive moisture from the vermiculite 11 and maintain the supplied moisture for a long time. The seed medium 12 may be referred to as a moisture retention portion for maintaining the moisture supplied from the vermiculite 11 for a long time. In this case, the vermiculite 11 may be referred to as a moisture absorption portion for supplying moisture to the seed medium 12.

Meanwhile, it may further include a medium housing that can accommodate the seed medium 12 therein. The medium housing may be positioned between the seed medium 12 and the vermiculite 11. A plurality of openings may be formed in the medium housing to supply moisture from the vermiculite 11 to the seed medium 12. In a state where the seed medium 12 is accommodated in the medium housing, the medium housing may have the medium insertion groove 11a inserted thereinto. The medium housing may be formed in the form of a container having an opened upper surface. The plurality of openings may be formed on a side surface and a bottom surface of the medium housing. When the medium housing may be further provided, it may be easy to separate the seed medium 12 from the vermiculite 11. In addition, the vermiculite 11 can be reused by replacing the seed medium 12.

One or more of the vermiculite 11 and the seed medium 12 may include a nutrient solution material (not illustrated). The nutrient solution material is a material containing nutrients that are supplied so that plants can grow better. For example, the nutrient solution material may be provided in the form of a water-soluble capsule that is gradually soluble in water and may be configured to be contained in the supply water while gradually dissolving when the supply water is supplied. The nutrient solution material may be supplied to the plant while being dissolved little by little in the supply water flowing from the vermiculite 11 toward the seed medium 12.

For example, when the nutrient solution material is positioned in the vermiculite 11, the nutrient solution material may be uniformly dissolved in the supply water and supplied to the seed medium 12. When the nutrient solution material is positioned in the seed medium 12, the nutrient solution material may be dissolved in the supply water supplied from the vermiculite 11 to the seed medium 12 and directly supplied to the plants. The disposition position of the nutrient solution material may be changed according to the characteristics and functions of the nutrient solution material.

The upper surface of the pod 10 may be covered with a protective paper 15 to protect the inside thereof. In particular, a packing member 14 is further provided between the top surface of the vermiculite 11 and the seed medium 12 and the protective paper 15 to protect the vermiculite 11 and the seed medium 12 from the external environment. In addition, the type of plant to be cultivated may be printed on one surface of the protective paper 15 to provide the user with information about the pod 10. The packing member 14 is seated on the upper surface of the vermiculite 11 and the seed medium 12 and can be in close contact with the side of the pod 10 to prevent movement of the vermiculite 11 and the seed medium 12. When the protective paper 15 is not provided, the type of plant may be printed on the upper surface of the packing member 14. In addition, when the packing member 14 is not provided, the protective paper 15 may be provided on the upper surfaces of the vermiculite 11 and the seed medium 12.

Meanwhile, a protrusion 16 protruding downward is formed on the bottom surface of the pod 10, and a water-through hole 16a may be formed on the bottom surface of the protrusion 16. The protrusion 16 may be formed in a pipe structure with a hollow inside while being opened up and down. The water-through hole 16a may be formed to have at least one opening.

The vermiculite 11 is positioned within the protrusion 16, and water supplied to the beds 300a and 300b may be absorbed by the vermiculite 11. The supply water absorbed by the vermiculite 11 disposed in the protrusion 16 may be uniformly supplied to the entire area of the vermiculite 11 disposed in the pod 10. The supply water evenly supplied to all portions of the vermiculite 11 may be supplied to the seed medium 12. In order to prevent the vermiculite 11 from falling off into the beds 300a and 300b through the water-through hole 16a, the water-through hole 16a can be composed of a porous portion formed as an opening having a size smaller than that of the vermiculite 11.

In the present embodiment, it is described that the vermiculite 11 is positioned in the protrusion 16, but a water absorbing member may be further included in the protrusion 16. The vermiculite 11 may be in contact with the upper surface of the water absorbing member. The water absorbing member may absorb the water supplied to the beds 300a and 300b and deliver to the vermiculite 11. When the water absorbing member is positioned within the protrusion 16, the water absorbing member prevents the vermiculite 11 from falling into the beds 300a and 300b, thereby increasing the size of the water-through hole 16a.

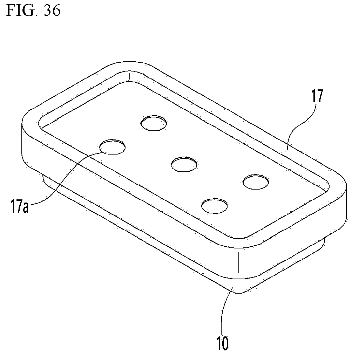

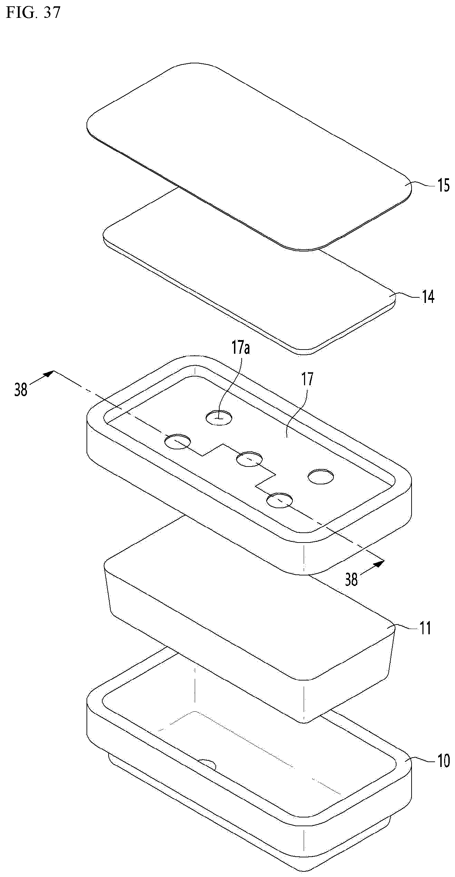

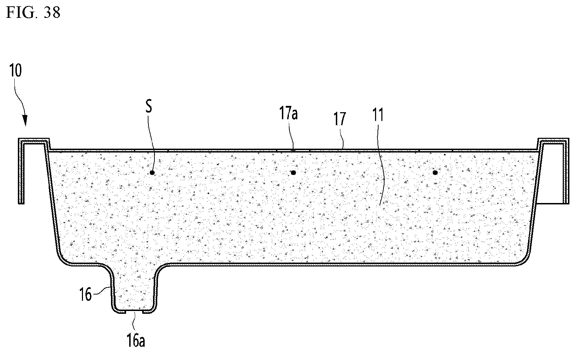

FIG. 36 is a perspective view illustrating a pod according to a sixth embodiment of the present disclosure, FIG. 37 is an exploded perspective view illustrating a pod according to a sixth embodiment of the present disclosure, and FIG. 38 is a cross-sectional view illustrating a pod according to a sixth embodiment of the present disclosure.

The pod 10 according to the sixth embodiment of the present disclosure is characterized in that a portion of the pod 10 according to one or more of the first embodiment and the second embodiment are modified. Therefore, the description of the pod 10 according to the sixth embodiment may refer to a portion of the description of the pod 10 according to one or more of the first embodiment and the second embodiment. Hereinafter, the pod 10 according to the sixth embodiment partially modified from the pod 10 according to one or more of the first and second embodiments will be described in detail.

As illustrated, the medium 11 may be filled in the pod 10. The medium 11 may be provided as vermiculite composed of an inorganic material. The seeds S may be uniformly arranged in the medium 11. Seed paper for supporting the seed S may be further included in the medium 11. The medium 11 contains a nutrient solution material, and the nutrient solution material may be supplied to the seeds S by supply water.

A pod cover 17 may be coupled to the upper surface of the pod 10. The pod cover 17 may be configured to cover the top surface of the pod 10. The pod cover 17 may be detachably coupled to the upper surface of the pod 10. For example, the pod cover 17 may be fitted to the upper surface of the pod 10 while covering the flange portion of the pod 10. The pod cover 17 may include a flange coupling portion coupled to the flange portion. The flange coupling portion may be formed to correspond to the flange portion of the pod 10 and coupled to the flange portion.

A portion of the pod cover 17 may be recessed in a direction from the top surface of the pod 10 toward the top surface of the medium 11. A portion of the pod cover 17 may be positioned at a center side of the pod cover 17. A portion of the pod cover 17 may be recessed in a direction toward the upper surface of the medium 11 to be in contact with the upper surface of the medium 11. The edge side of the pod cover 17 may be configured to be coupled to the pod 10. The center side and the edge side of the pod cover 17 may be formed to be stepped. Alternatively, a portion of the pod cover 17 may be recessed in a direction toward the upper surface of the medium 11, and a space may be formed between a portion of the pod cover 17 and the upper surface of the medium 11.

In other words, the recessed length at which a portion of the pod cover 17 is recessed is adjusted so that the upper surfaces of the pod cover 17 and the medium 11 are in contact with or separated from each other.

When a portion of the pod cover 17 is formed to be in contact with the upper surface of the medium 11, it is possible to prevent the medium 11 from moving during the transfer process. The pod cover 17 may block a portion of the light irradiated to the medium 11 to suppress mold or green algae generated in the medium 11. In addition, since a portion of the medium 11 is shielded by the pod cover 17, exposure to the user can be minimized even if mold or green algae is generated in the medium 11.

Meanwhile, the pod cover 17 may be provided in the form of a sheet provided on the upper surface of the medium 11. In this case, the pod cover 17 may be fixed to the upper surface or the inner surface of the pod 10.

A cover hole 17a may be formed in the pod cover 17. The cover hole 17a may be formed by opening a portion of the pod cover 17. The cover hole 17a may allow light to be irradiated in a direction toward the seed S positioned in the medium 11. The cover hole 17a may allow the plant grown in the medium 11 to be exposed to the outside. The cover hole 17a may allow air to flow into the pod 10 and the pod cover 17 coupled to each other. The cover hole 17a is positioned above the seeds S positioned in the medium 11, and when a plurality of seeds S are spaced apart in the medium 11, the cover hole 17a may be formed at a position corresponding to a plurality of seeds S spaced apart.

When the upper surface of the pod 10 is covered with the pod cover 17, the area of the medium 11 exposed to the external space is reduced, so that mold or green algae that may be generated in the medium 11 can be reduced. In addition, since the pod cover 17 is coupled to the upper surface of the pod 10, the medium 11 positioned in the pod 10 can be stably stored.

Meanwhile, in this embodiment, the seed S is described as being positioned in the medium 11, and a seed paper is further provided in the inside of the medium 11 on which the seed S is placed.

In addition, one or more of the packing member 14 and the protective paper 15 may be further provided on the pod cover 17. One or more of the packing member 14 and the protective paper 15 may be positioned on the upper surface of the pod cover 17. One or more of the packing member 14 and the protective paper 15 indicates the type of plant stored in the seed medium 12 and can prevent the medium 11 from being separated to the outside through the cover hole 17a.

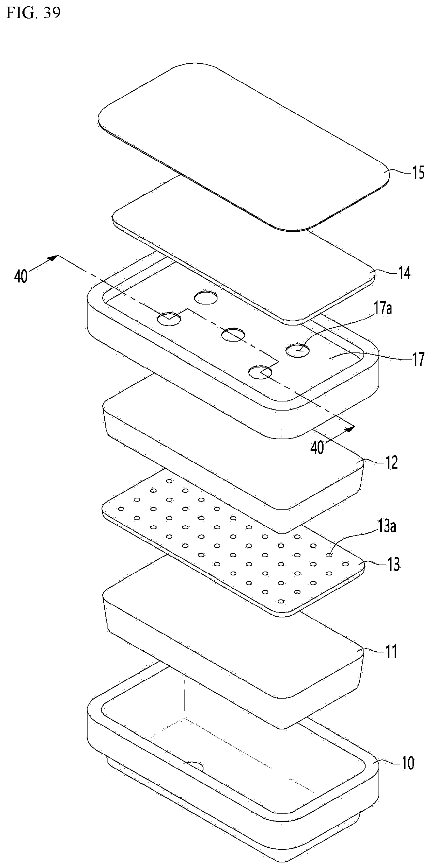

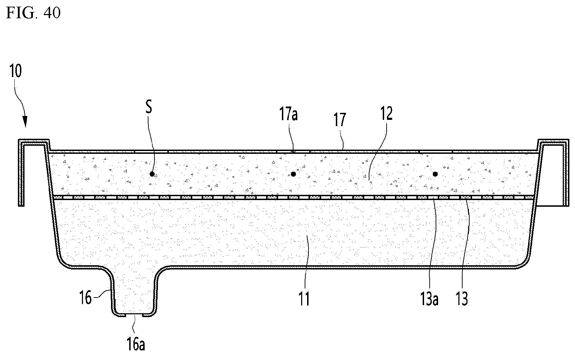

FIG. 39 is an exploded perspective view illustrating a pod according to a seventh embodiment of the present disclosure, and FIG. 40 is a cross-sectional view illustrating a pod according to a seventh embodiment of the present disclosure.

The pod 10 according to the seventh embodiment of the present disclosure is characterized in that a portion of the pod 10 according to one or more of the third embodiment and the fourth embodiment are modified. Therefore, the description of the pod 10 according to the seventh embodiment may refer to a portion of the description of the pod 10 according to one or more of the third embodiment and the fourth embodiment. Hereinafter, the pod 10 according to the seventh embodiment partially modified from the pod 10 according to one or more of the third embodiment and the fourth embodiment will be described in detail.

As illustrated, the media 11 and 12 may be filled in the pod 10. The media 11 and 12 may include a lower medium 11 and an upper medium 12. The seeds S may be constantly arranged in the upper medium 12. Seed paper for supporting the seeds S may be further included in the upper medium 12. One or more of the upper medium 12 and the lower medium 11 contain a nutrient solution material, and the nutrient solution material may be supplied to the seeds S by supply water. A moisture separation membrane 13 having a plurality of moisture-passage holes 13a may be disposed between the upper medium 12 and the lower medium 11.

The moisture separation membrane 13 may adjust the flow rate of water supplied from the lower medium 11 to the upper medium 12. The moisture separation membrane 13 may have waterproof properties. The moisture in the lower medium 11 and the moisture in the upper medium 12 may be adjusted differently by the moisture separation membrane 13. The lower medium 11 may have a relatively higher humidity than the upper medium 12. Moisture in the lower medium 11 may be supplied to the upper medium 12 through the moisture-passage hole 13a. After water is evenly spread in the lower medium 11 by the moisture separation membrane 13, water may be uniformly supplied to the upper medium 12.

A pod cover 17 may be coupled to the upper surface of the pod 10. The pod cover 17 may be configured to cover the top surface of the pod 10. The pod cover 17 may be detachably coupled to the upper surface of the pod 10. For example, the pod cover 17 may be fitted to the upper surface of the pod 10 while covering the flange portion of the pod 10. The pod cover 17 may include a flange coupling portion coupled to the flange portion. The flange coupling portion may be formed to correspond to the flange portion of the pod 10 to be coupled to the flange portion.

A portion of the pod cover 17 may be recessed in a direction from the top surface of the pod 10 toward the top surface of the upper medium 12. A portion of the pod cover 17 may be positioned at a center side of the pod cover 17. A portion of the pod cover 17 may be recessed in a direction toward the upper surface of the upper medium 12 to be in contact with the upper surface of the upper medium 12. The edge side of the pod cover 17 may be configured to be coupled to the pod 10. The center side and the edge side of the pod cover 17 may be formed to be stepped. In addition, a portion of the pod cover 17 is recessed in a direction toward the upper surface of the upper medium 12, and a space may be formed between a portion of the pod cover 17 and the upper surface of the upper medium 12.

In other words, the recessed length at which a portion of the pod cover 17 is recessed is adjusted so that the upper surfaces of the pod cover 17 and the medium 11 are in contact with or separated from each other.

When a portion of the pod cover 17 is formed to be in contact with the upper surface of the upper medium 12, it is possible to prevent the media 11 and 12 from moving during the transfer of the pod 10. The pod cover 17 may block a portion of the light irradiated to the upper medium 12 to suppress the generation of mold or green algae generated in the upper medium 12. Since a portion of the upper medium 12 is shielded by the pod cover 17, exposure to the user can be minimized even if mold or green algae is generated in the upper medium 12.

Meanwhile, the pod cover 17 may be provided in the form of a sheet provided on the upper surface of the upper medium 12. In this case, the pod cover 17 may be fixed to the upper surface or the inner surface of the pod 10.

A cover hole 17a may be formed in the pod cover 17. The cover hole 17a may be formed by opening a portion of the pod cover 17. The cover hole 17a may allow light to be irradiated in a direction toward the seed S positioned in the upper medium 12. The cover hole 17a may allow the plant grown in the upper medium 12 to be exposed to the outside.

The cover hole 17a may allow air to flow into the pod 10 and the pod cover 17 coupled to each other. The cover hole 17a is positioned above the seeds S positioned in the upper medium 12, when a plurality of seeds S are disposed spaced apart in the upper medium 12, the cover hole 17a may be formed at a position corresponding to a plurality of seeds S spaced apart.

When the upper surface of the pod 10 is covered with the pod cover 17, the area of the upper medium 12 exposed to the external space is reduced, so that mold or green algae that may be generated in the upper medium 12 can be reduced. In addition, since the pod cover 17 is coupled to the upper surface of the pod 10, the media 11 and 12 positioned in the pod 10 can be stably stored.

Meanwhile, in this embodiment, the seed S is described as being positioned in the upper medium 12, the seed paper on which the seed S is placed in the upper medium 11 may be further included.

In addition, one or more of the packing member 14 and the protective paper 15 may be further provided on the pod cover 17. One or more of the packing member 14 and the protective paper 15 may be positioned on the upper surface of the pod cover 17.

According to the present disclosure, since the pod cover 17 is coupled to the upper surface of the pod 10, exposure of the upper medium 12 to the external space may be limited. Since the upper medium 12 is not exposed to the external space, moisture may be sufficiently maintained in the upper medium 12. In addition, it is possible to minimize the generation of mold or green algae by minimizing the area of the upper medium 12 exposed to the external space.

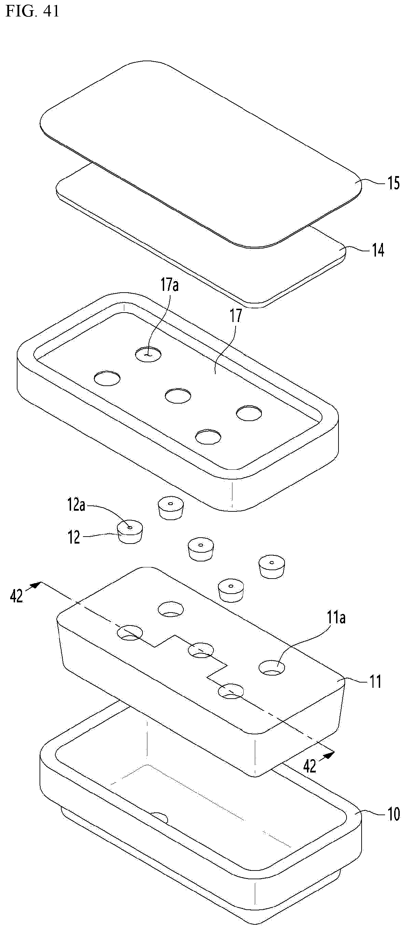

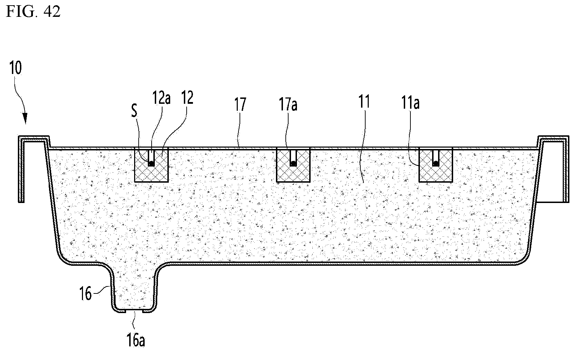

FIG. 41 is an exploded perspective view illustrating a pod according to an eighth embodiment of the present disclosure, and FIG. 42 is a cross-sectional view illustrating a pod according to an eighth embodiment of the present disclosure.

The pod 10 according to the eighth embodiment of the present disclosure is characterized in that a portion of the pod 10 according to the fifth embodiment is deformed. Therefore, the description of the pod 10 according to the eighth embodiment may refer to a portion of the description of the pod 10 according to the fifth embodiment. Hereinafter, the pod 10 according to the eighth embodiment partially modified from the pod 10 according to the fifth embodiment will be described in detail.

As illustrated, the medium 11 may be filled in the pod 10. The medium 11 may be provided as vermiculite composed of an inorganic material. The medium 11 may absorb water so that the water of the water collection portion 320 flows into the pod 10.

The medium 11 may further be provided with a seed medium 12. A portion of the seed medium 12 may be fixed inside the medium 11. The seed medium 12 may be provided as one of a sponge with excellent water retention properties and a floral foam (oasis foam). A medium insertion groove 11a into which the seed medium 12 is inserted may be formed in the medium 11. The seed medium 12 and the medium insertion groove 11a may be formed by recessing a portion of the medium 11. The seed medium 12 and the medium insertion groove 11a may be arranged at regular intervals in the medium 11.

The seed S may be accommodated in the seed medium 12. A seed insertion groove 12a for inserting the seed S into the seed medium 12 may be provided. The seed insertion groove 12a may be formed by recessing or opening a portion of the seed medium 12. In a state where the seed S is inserted into the seed medium 12, the seed insertion groove 12a may be shielded.

One or more of the medium 11 and the seed medium 12 may contain a nutrient solution. The nutrient solution material may be dissolved by the supply water supplied to the medium 11 and the seed medium 12 and supplied to the seeds S.

A pod cover 17 may be coupled to the upper surface of the pod 10. The pod cover 17 may be configured to cover the top surface of the pod 10. The pod cover 17 may be detachably coupled to the upper surface of the pod 10. For example, the pod cover 17 may be fitted to the upper surface of the pod 10 while covering the flange portion of the pod 10. The pod cover 17 may include a flange coupling portion coupled to the flange portion. The flange coupling portion may be formed to correspond to the flange portion of the pod 10 and coupled to the flange portion.

A portion of the pod cover 17 may be recessed in a direction toward the upper surface of the medium 11. A portion of the pod cover 17 may be positioned at a center side of the pod cover 17. A portion of the pod cover 17 may be recessed in a direction toward the upper surface of the medium 11 to be in contact with the upper surface of the medium 11. The edge side of the pod cover 17 may be configured to be coupled to the pod 10. The center side and the edge side of the pod cover 17 may be formed to be stepped. Alternatively, a portion of the pod cover 17 may be recessed in a direction toward the upper surface of the medium 11, and a space may be formed between a portion of the pod cover 17 and the upper surface of the medium 11.

In other words, the recessed length at which a portion of the pod cover 17 is recessed is adjusted so that the upper surfaces of the pod cover 17 and the medium 11 are in contact with or separated from each other.

When a portion of the pod cover 17 is formed to be in contact with the upper surface of the medium 11, it is possible to prevent the medium 11 from moving during the transfer process. The pod cover 17 may block a portion of the light irradiated to the medium 11 to suppress the generation of mold or green algae generated in the medium 11.

When a portion of the pod cover 17 is positioned to be spaced apart from the upper surface of the medium 11, air may pass between the medium 11 and the pod cover 17. Since a portion of the medium 11 can be shielded by the pod cover 17, exposure to the user can be minimized even if mold or green algae is generated in the medium 11.

Meanwhile, the pod cover 17 may be provided in the form of a sheet provided on the upper surface of the medium 11. In this case, the pod cover 17 may be fixed to the upper surface or the inner surface of the pod 10.

A cover hole 17a may be formed in the pod cover 17. The cover hole 17a may be formed by opening a portion of the pod cover 17. The cover hole 17a may allow light to be irradiated toward the seeds S positioned in the seed medium 12. The cover hole 17a may be positioned above the seed medium 12. The cover hole 17a may allow the plant grown in the seed medium 12 to be exposed to the outside.

Air may flow into the pod 10 and the pod cover 17 coupled to each other through the cover hole 17a. The cover hole 17a may be formed at a position corresponding to the seed medium 12.

When the upper surface of the pod 10 is covered with the pod cover 17, the area of the medium 11 and the seed medium 12 exposed to the external space is reduced, so that mold or green algae that can be generated in the medium 11 and the seed medium 12 can be reduced. In addition, since the pod cover 17 is coupled to the upper surface of the pod 10, the medium 11 and the seed medium 12 positioned in the pod 10 can be stably stored.

In addition, one or more of the packing member 14 and the protective paper 15 may be further provided on the upper surface of the pod cover 17. One or more of the packing member 14 and the protective paper 15 indicates the type of plant stored in the seed medium 12, and it is possible to prevent one or more the medium 11 and the seed medium 12 from being separated to the outside through the cover hole 17a.

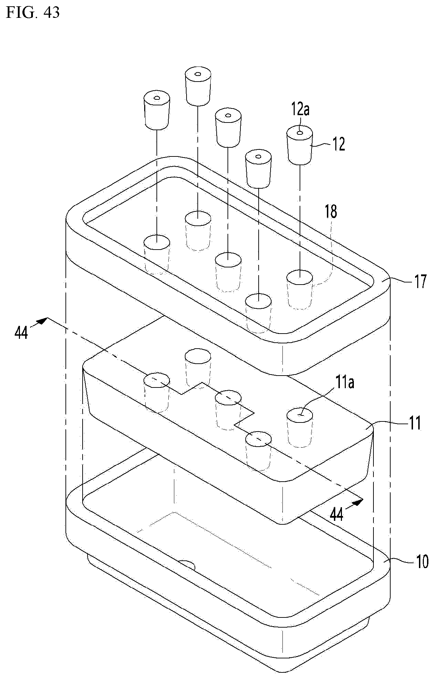

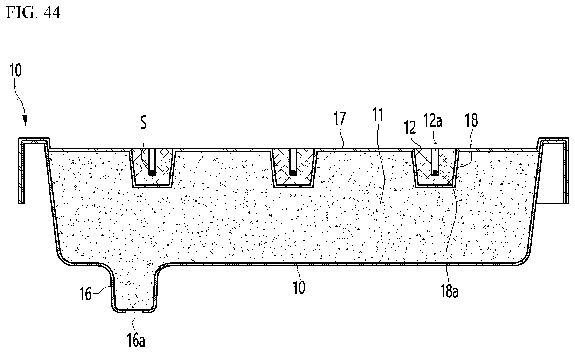

FIG. 43 is an exploded perspective view illustrating a pod according to a ninth embodiment of the present disclosure, and FIG. 44 is a cross-sectional view illustrating a pod according to a ninth embodiment of the present disclosure.

The pod 10 according to the ninth embodiment of the present disclosure is characterized in that a portion of the pod 10 according to one or more of the first to eighth embodiments are modified. Therefore, the description of the pod 10 according to the ninth embodiment may refer to a portion of the description of the pod 10 according to one or more of the first to eighth embodiments. Hereinafter, the pod 10 according to the ninth embodiment partially modified from the pod 10 according to one or more of the first to eighth embodiments will be described in detail.

As illustrated, the pod 10 may be formed in the shape of a container in which the upper surface is opened. A space may be formed in the pod 10. A pod protrusion 16 may be formed on the bottom surface of the pod 10. Water may flow into the pod 10 through the pod protrusion 16. A medium may be filled in the pod 10. The medium filled in the pod 10 may be referred to as a first medium 11. The first medium 11 may be provided as vermiculite. A nutrient solution material may be included in the first medium 11.

The opened upper surface of the pod 10 may be covered by a pod cover 17. The pod cover 17 may be detachably coupled to the upper surface of the pod 10. The pod cover 17 may have a center side recessed downward, and an edge side may be coupled to the pod 10. The center side and the edge side of the pod cover 17 may be formed to be stepped.

A recessed portion 18 may be included at the center side of the pod cover 17. A portion of the pod cover 17 may be recessed downward to form the recessed portion 18, and an opening may be formed in a portion of the pod cover 17. An opening formed in the pod cover 17 may be defined as an upper surface of the recessed portion 18. The recessed portion 18 may be formed to be inclined from the upper side to the lower side.

The recessed portion 18 may be formed to have a side surface and a bottom surface by being recessed downward from the pod cover 17. The recessed portion 18 may be formed to be stepped with the pod cover 17. A medium may be filled in the recessed portion 18. The medium filled in the recessed portion 18 may be referred to as a second medium 12. The second medium 12 may contain a nutrient solution material. In other words, the nutrient solution material for plant growth may be provided in one or more of the first medium 11 and the second medium 12.

The second medium 12 may be made of a material having better water retention properties than the first medium 11. For example, the second medium 12 may be provided as one of a sponge and a floral foam (oasis foam). The second medium 12 is positioned in the recessed portion 18 and is supplied with water from the first medium 11, so that the second medium 12 is composed of a material superior in water retention properties than the first medium 11 to provide sufficient water supply to seeds S. The second medium 12 may allow moisture to be maintained in the recessed portion 18 for a long time.

The recessed portion 18 may include a water absorbing hole 18a. The water absorbing hole 18a may be positioned on one or more of a bottom surface and a side surface of the recessed portion 18. The water absorbing hole 18a may allow the first medium 11 and the second medium 12 to communicate with each other. In other words, the supply water supplied through the first medium 11 may be supplied to the second medium 12 after passing through the water absorbing hole 18a. The water absorbing hole 18a may be filled with at least one of the first medium 11 and the second medium 12 so that the first medium 11 and the second medium 12 are in contact with each other. The water absorbing hole 18a may be formed in the same manner as the water-through hole 16a.

Meanwhile, a recessed portion insertion groove 11a into which the recessed portion 18 is inserted may be formed in the first medium 11. The recessed portion insertion groove 11a may be formed to have a size corresponding to the recessed portion 18. The recessed portion insertion groove 11a may be formed by recessing the upper surface of the first medium 11 downward. When the pod cover 17 is coupled to the upper surface of the pod 10, the recessed portion insertion groove 11a may be formed in the first medium 11 by the recessed portion 18.

A seed groove 12a inserted into the seed S may be formed in the second medium 12. The seed groove 12a may be formed by recessing one surface of the second medium 12. For example, the seed groove 12a may be formed by recessing the upper surface of the second medium 12 downward. The seed groove 12a may be positioned in the center of the second medium 12. The seed groove 12a may be shielded when the seed S is positioned in the second medium 12.

When the seed S germinates in the seed groove 12a, the root of the seed S may grow into the second medium 12. In addition, the root of the seed may be further grown into the first medium 11 after passing through the absorption hole 18a. When the seed S germinates in the seed groove 12a and the root thereof grows into the second medium 12, the user can separate the second medium 12 and the plant together to be capable of use the second medium and the plant as a seeding planting in soil or the like.

Meanwhile, one or more of the packing member 14 and the protective paper 15 may be further provided on the pod cover 17. One or more of the packing member 14 and the protective paper 15 may be positioned on the upper surface of the pod cover 17. Since one or more of the packing member 14 and the protective paper 15 covers the upper surface of the pod cover 17, it is possible to prevent the second medium 12 from leaking into the external space during the transfer process. In addition, information indicating the type of the seed S may be displayed on one or more of the packing member 14 and the protective paper 15.

According to the present disclosure, since the pod cover 17 is coupled to the upper surface of the pod 10, exposure of the first medium 11 to the external space may be limited. Since the first medium 11 is not exposed to the external space, sufficient moisture may be maintained in the first medium 11. In addition, it is possible to minimize the generation of mold or green algae by minimizing the area of the first medium 11 and the second medium 12 exposed to the external space.

## Claims

1. An apparatus for cultivating plants (1) comprising:
a cabinet (100) forming a growing space;
a bed (300) configured to be disposed in the cultivation space (101) and provided with a water collection portion (320) for storing water;
a light assembly (400) configured to be positioned above the bed (300) and configured to irradiate light to the bed (300);
a pod (10) having an accommodating space and provided with a water-through hole (16a) for flowing water stored in the water collection portion (320) thereinto;
a medium (12) configured to be disposed in the accommodation space and having a seed insertion groove (12a) recessed from the top to the bottom to insert the seeds (S) therein; and
a pod cover (17) configured to be coupled to the pod (10) to cover the medium (12) and having a cover hole (17a) formed above the seed insertion groove (12a),
wherein
a water absorbing medium (11) configured to supply the water flowing into the water-through hole (16a) to the medium (12) is further provided in the accommodation space,
**characterised in that** the apparatus comprises
a medium insertion groove (11a) for inserting the medium (12) is formed in the water absorbing medium (11).

2. The apparatus for cultivating plants (1) of claim 1,
wherein a plurality of the media (11), (12) in which the seed insertion groove (12a) are formed are provided to be spaced apart from each other, and
wherein the cover hole (17a) is formed above the seed insertion groove (12a) formed in each of the plurality of media (11), (12).

3. The apparatus for cultivating plants (1) of claim 1, further comprising:
a packing member (14) configured to be coupled to the pod cover (17) to cover the cover hole (17a),
wherein the kind of the seed (S) is printed on one surface of the packing member (14).

4. The apparatus for cultivating plants (1) of claim 1,
wherein a plurality of seed insertion grooves (12a) disposed to be spaced apart from each other are formed in the medium (12), and
wherein the pod cover (17) includes a plurality of cover holes (17a) formed above the plurality of seed insertion grooves (12a).

5. The apparatus for cultivating plants (1) of claim 1,
wherein the pod cover (17) further includes a recessed portion (18) recessed downwardly from the pod cover (17) and connected to the cover hole (17a), and
wherein the medium (12) is disposed inside the recessed portion (18).

6. The apparatus for cultivating plants (1) of claim 5,
wherein the recessed portion (18) further includes a water absorbing hole (18a) configured to connect the medium (12) and the water absorbing medium (11).

7. The apparatus for cultivating plants (1) of claim 1,
wherein the medium (12) is located above the water absorbing medium (11), and
wherein between the medium (12) and the water absorbing medium (11), a moisture separation membrane (13) provided with a moisture-through hole (13a) through which water flowing from the water absorbing medium (11) toward the medium (12) passes.

8. The apparatus for cultivating plants (1) of claim 1,
wherein the medium (12) is provided as any one of an inorganic vermiculite medium, a porous suction member, and a floral foam, and
wherein the medium (12) further includes a chemical substance for supplying nutrients to the seeds (S) by dissolving in the water.

9. The apparatus for cultivating plants (1) of claim 1,
wherein the water-through hole (16a) is formed on the bottom surface of the pod (10).

10. The apparatus for cultivating plants (1) of claim 9, further comprising:
a pod protrusion (16) extending downward from the bottom surface of the pod (10),
wherein the water-through hole (16a) is formed on the bottom surface of the pod protrusion (16).

11. The apparatus for cultivating plants (1) of claim 10,
wherein the pod protrusion (16) further includes an water absorbing member configured to allow the water stored in the water collection portion (320) to be absorbed into the water-through hole (16a).

12. The apparatus for cultivating plants (1) of claim 1,
wherein a diameter of the cover hole (17a) is larger than a diameter of the seed insertion groove (12a).

## Patentansprüche

1. Vorrichtung (1) zum Kultivieren von Pflanzen, die Folgendes umfasst:
einen Schrank (100), der einen Anzuchtraum bildet;
ein Beet (300), das konfiguriert ist, im Kultivierungsraum (101) angeordnet zu werden, und mit einem Wassersammelabschnitt (320) zum Speichern von Wasser versehen ist;
eine Lichtanordnung (400), die konfiguriert ist, über dem Beet (300) angeordnet zu werden, und konfiguriert ist, Licht auf das Beet (300) einzustrahlen;
eine Schale (10), die einen Aufnahmeraum aufweist und ein Wasserdurchgangsloch (16a), damit Wasser, das im Wassersammelabschnitt (320) gespeichert ist, dort hinein strömt, aufweist;
ein Medium (12), das konfiguriert ist, im Aufnahmeraum angeordnet zu werden, und eine Saateinsetzrille (12a) aufweist, die von der Oberseite bis zur Unterseite ausgespart ist, um die Saaten (S) darin einzusetzen; und
eine Schalenabdeckung (17), die konfiguriert ist, mit der Schale (10) gekoppelt zu werden, um das Medium (12) abzudecken, und ein Abdeckungsloch (17a) aufweist, das über der Saateinsetzrille (12a) gebildet ist,
wobei ein wasserabsorbierendes Medium (11), das konfiguriert ist, das Wasser, das in das Wasserdurchgangsloch (16a) strömt, dem Medium (12) zuzuführen, ferner im Aufnahmeraum vorgesehen ist,
**dadurch gekennzeichnet, dass** die Vorrichtung eine Medieneinsetzrille (11a) zum Einsetzen des Mediums (12) umfasst, die im wasserabsorbierenden Medium (11) gebildet ist.

2. Vorrichtung (1) zum Kultivieren von Pflanzen nach Anspruch 1,
wobei mehrere der Medien (11), (12), in denen die Saateinsetzrille (12a) gebildet ist, derart vorgesehen sind, dass sie voneinander beabstandet sind, und
wobei das Abdeckungsloch (17a) über der Saateinsetzrille (12a) gebildet ist, die in jedem der mehreren Medien (11), (12) gebildet ist.

3. Vorrichtung (1) zum Kultivieren von Pflanzen nach Anspruch 1, die ferner Folgendes umfasst:
ein Füllelement (14), das konfiguriert ist, mit der Schalenabdeckung (17) gekoppelt zu werden, um das Abdeckungsloch (17a) abzudecken,
wobei die Art der Saat (S) auf eine Fläche des Füllelements (14) aufgedruckt ist.

4. Vorrichtung (1) zum Kultivieren von Pflanzen nach Anspruch 1,
wobei mehrere Saateinsetzrillen (12a), die derart angeordnet sind, dass sie voneinander beabstandet sind, im Medium (12) gebildet sind, und
wobei die Schalenabdeckung (17) mehrere Abdeckungslöcher (17a) enthält, die über den mehreren Saateinsetzrillen (12a) gebildet sind.

5. Vorrichtung (1) zum Kultivieren von Pflanzen nach Anspruch 1,
wobei die Schalenabdeckung (17) ferner einen ausgesparten Abschnitt (18) enthält, der von der Schalenabdeckung (17) nach unten ausgespart ist und mit dem Abdeckungsloch (17a) verbunden ist, und
wobei das Medium (12) im Inneren des ausgesparten Abschnitts (18) angeordnet ist.

6. Vorrichtung (1) zum Kultivieren von Pflanzen nach Anspruch 5,
wobei der ausgesparte Abschnitt (18) ferner ein Wasserabsorptionsloch (18a) enthält, das konfiguriert ist, das Medium (12) und das wasserabsorbierende Medium (11) zu verbinden.

7. Vorrichtung (1) zum Kultivieren von Pflanzen nach Anspruch 1,
wobei das Medium (12) über dem wasserabsorbierenden Medium (11) angeordnet ist, und
wobei zwischen dem Medium (12) und dem wasserabsorbierenden Medium (11) eine Feuchtigkeitsscheidemembran (13) mit einem Feuchtigkeitsdurchgangsloch (13a), durch das Wasser, das vom wasserabsorbierenden Medium (11) zum Medium (12) strömt, hindurchtritt, vorgesehen ist.

8. Vorrichtung (1) zum Kultivieren von Pflanzen nach Anspruch 1,
wobei das Medium (12) als ein beliebiges von einem anorganischen Vermiculit-Medium, einem porösen Saugelement und einem Pflanzenschaumstoff vorgesehen ist, und
wobei das Medium (12) ferner eine chemische Substanz zum Zuführen von Nährstoffen zu den Saaten (S) durch Auflösen in Wasser enthält.

9. Vorrichtung (1) zum Kultivieren von Pflanzen nach Anspruch 1,
wobei das Wasserdurchgangsloch (16a) auf einer unteren Fläche der Schale (10) gebildet ist.

10. Vorrichtung (1) zum Kultivieren von Pflanzen nach Anspruch 9, die ferner Folgendes umfasst:
einen Schalenvorsprung (16), der sich von der unteren Fläche der Schale (10) nach unten erstreckt,
wobei das Wasserdurchgangsloch (16a) auf der unteren Fläche des Schalenvorsprungs (16) gebildet ist.

11. Vorrichtung (1) zum Kultivieren von Pflanzen nach Anspruch 10,
wobei der Schalenvorsprung (16) ferner ein wasserabsorbierendes Element enthält, das konfiguriert ist zu ermöglichen, dass das Wasser, das im Wassersammelabschnitt (320) gespeichert ist, in das Wasserdurchgangsloch (16a) absorbiert wird.

12. Vorrichtung (1) zum Kultivieren von Pflanzen nach Anspruch 1,
wobei ein Durchmesser des Abdeckungslochs (17a) größer als ein Durchmesser der Saateisetzrille (12a) ist.

## Revendications

1. Appareil de culture de plantes (1) comportant :
une armoire (100) formant un espace de croissance ;
un plateau (300) configuré pour être disposé dans l'espace de culture (101) et pourvu d'une partie de collecte d'eau (320) pour stocker de l'eau ;
un ensemble d'éclairage (400) configuré pour être positionné au-dessus du plateau (300) et configuré pour projeter la lumière vers le plateau (300) ;
un contenant (10) ayant un espace de réception et pourvu d'un trou de passage d'eau (16a) pour faire couler l'eau stockée dans la partie de collecte d'eau (320) dans celle-ci ;
un milieu (12) configuré pour être disposé dans l'espace de réception et ayant une rainure d'insertion de graines (12a) évidée du haut vers le bas pour insérer les graines (S) dans celle-ci ; et
un couvercle de contenant (17) configuré pour être couplé au contenant (10) afin de recouvrir le milieu (12) et ayant un trou de couvercle (17a) formé au-dessus de la rainure d'insertion de graines (12a),
dans lequel un milieu absorbant l'eau (11) configuré pour fournir au milieu (12) l'eau s'écoulant dans le trou de passage d'eau (16a) est en outre fourni dans l'espace de réception,
**caractérisé en ce que** l'appareil comporte :
une rainure d'insertion de milieu (11a) pour insérer le milieu (12) qui est formée dans le milieu absorbant l'eau (11).

2. Appareil de culture de plantes (1) selon la revendication 1,
dans lequel les milieux d'une pluralité des milieux (11), (12) dans lesquels les rainures d'insertion de graines (12a) sont formées, sont fournis de manière à être espacés les unes des autres, et
dans lequel le trou de couvercle (17a) est formé au-dessus de la rainure d'insertion de graines (12a) formée dans chaque milieu de la pluralité de milieux (11), (12).

3. Appareil de culture de plantes (1) selon la revendication 1, comportant en outre :
un élément de garnissage (14) configuré pour être couplé au couvercle de contenant (17) afin de recouvrir le trou de couvercle (17a),
dans lequel la variété de la semence (S) est imprimée sur une surface de l'élément de garnissage (14).

4. Appareil de culture de plantes (1) selon la revendication 1,
dans lequel les rainures d'une pluralité de rainures d'insertion de graines (12a) disposées de manière à être espacées les unes des autres sont formées dans le milieu (12), et
dans lequel le couvercle de contenant (17) inclut une pluralité de trous de couvercle (17a) formés au-dessus de la pluralité de rainures d'insertion de graines (12a).

5. Appareil de culture de plantes (1) selon la revendication 1,
dans lequel le couvercle de contenant (17) inclut en outre une partie évidée (18) évidée vers le bas à partir du couvercle de contenant (17) et reliée au trou de couvercle (17a), et
dans lequel le milieu (12) est disposé à l'intérieur de la partie évidée (18).

6. Appareil de culture de plantes (1) selon la revendication 5,
dans lequel la partie évidée (18) inclut en outre un trou absorbant l'eau (18a) configuré pour relier le milieu (12) et le milieu absorbant l'eau (11).

7. Appareil de culture de plantes (1) selon la revendication 1,
dans lequel le milieu (12) est situé au-dessus du milieu absorbant l'eau (11), et
dans lequel, entre le milieu (12) et le milieu absorbant l'eau (11), une membrane de séparation de l'humidité (13) pourvue d'un trou de passage de l'humidité (13a) à travers lequel passe l'eau qui s'écoule à partir du milieu absorbant l'eau (11) vers le milieu (12).

8. Appareil de culture de plantes (1) selon la revendication 1,
dans lequel le milieu (12) est fourni sous la forme d'un élément quelconque parmi un milieu de vermiculite inorganique, un élément d'aspiration poreux et une mousse florale, et
dans lequel le milieu (12) inclut en outre une substance chimique destinée à fournir des nutriments aux graines (S) par dissolution dans l'eau.

9. Appareil de culture de plantes (1) selon la revendication 1,
dans lequel le trou de passage d'eau (16a) est formé sur la surface de fond du contenant (10).

10. Appareil de culture de plantes (1) selon la revendication 9, comportant en outre :
une saillie de contenant (16) s'étendant vers le bas à partir de la surface de fond du contenant (10),
dans lequel le trou de passage d'eau (16a) est formé sur la surface inférieure de la saillie de contenant (16).

11. Appareil de culture de plantes (1) selon la revendication 10,
dans lequel la saillie de contenant (16) inclut en outre un élément absorbant l'eau configuré pour permettre d'absorber l'eau stockée dans la partie de collecte d'eau (320) dans le trou de passage d'eau (16a).

12. Appareil de culture de plantes (1) selon la revendication 1,
dans lequel un diamètre du trou de couvercle (17a) est supérieur à un diamètre de la rainure d'insertion de graines (12a).
